# EUROPEAN PATENT SPECIFICATION

(11) **EP 2 419 479 B1**
(45) Date of publication and mention of the grant of the patent: **05.02.2020**
(21) Application number: 10764767.9
(22) Date of filing: 14.04.2010
(51) Int. Cl.: C09C 3/00, B82B 3/00

(54) **METHOD OF CREATING COLORED MATERIALS BY FIXING ORDERED STRUCTURES OF MAGNETITE NANOPARTICLES WITHIN A SOLID MEDIA**
VERFAHREN ZUR HERSTELLUNG VON GEFÄRBTEN MATERIALIEN ANHAND DER FIXIERUNG GEORDNETER MAGNETITNANOPARTIKELSTRUKTUREN IN EINEM FESTEN MEDIUM
PROCÉDÉ DE CRÉATION DE MATIÈRES COLORÉES PAR FIXATION DE STRUCTURES ORDONNÉES DE NANOPARTICULES DE MAGNÉTITE DANS UN MILIEU SOLIDE

(30) Priority: 14.04.2009 US 169260 P
(43) Date of publication of application: 22.02.2012
(73) Proprietor: The Regents of the University of California, Oakland, CA 94607 (US); Kwon, Sunghoon, Seoul 151-742 (KR)
(72) Inventor: KWON, Sunghoon, Seoul 151-742 (KR); YIN, Yadong, Riverside, CA 92508 (US); GE, Jianping, Shanghai (CN)
(74) Representative: Haseltine Lake Kempner LLP
(86) International application number: PCT/US2010/001105
(87) International publication number: WO 2010/120361

(56) References cited:
- WO-A2-2009/017525
- GE, J. ET AL.: 'Highly Tunable Superparamagnetic Colloidal Photonic Crystals' ANGEW. CHEM. INT. ED. vol. 46, 2007, pages 7428 - 7431, XP008156708
- XU, X. ET AL.: 'Superparamagnetic Photonic Crystals' ADV. MATER. vol. 13, no. 22, November 2001, pages 1681 - 1684, XP001130219

## Description

### FIELD OF THE INVENTION

This invention relates to methods of creating colored materials by fixing ordered structures of magnetite nanoparticles within a solid media, such that the ordered structures diffract light to create colors.

### BACKGROUND

Superparamagnetic nanocrystals, or photonic crystals, which are capable of forming ordered structures that diffract light to create colors, have been previously described. For example, Yin et al, Superparamagnetic Magnetite Colloidal Nanocrystal Clusters, Angwantde Chemie, 46:4342 (2007), Magnetically responsive colloidal photonic crystals, Journal of Material Chemistry 18: 5041 (2008**),** Self-Assembly and Field-Responsive Optical Diffractions of Superparamagnetic Colloids, Langmuir 24:3671 (2008), Assembly of Magnetically Tunable Photonic Crystals in Nonpolar Solvents, JACS 131: 3484 (2009), and WO2009/017525 all describe the synthesis of magnetite nanocrystals, or photonic crystals, which can be induced to form ordered structures when exposed to a magnetic field. Furthermore, these ordered structures can be tuned by varying the strength of the magnetic field such that different diffractive patterns and colors are created. However these previous efforts have required a constant magnetic field in order to maintain the ordered structure and thus the color.

Accordingly, it would be desirable to have materials and methods comprising photonic nanocrystals which can be tuned in a liquid medium to create ordered structures which impart color, and which such ordered structures can be fixed by converting the liquid medium to solid. It would further be desirable to create ordered structures of photonic crystals in a medium which can be reversibly converted from liquid to solid, such that the color can be changed.

### SUMMARY

In its broadest scope, the invention described herein comprises compositions and methods wherein ordered structures of photonic nanocrystals are created in a liquid medium and then such structures are fixed by converting the liquid medium to a solid. Further provided are methods of reversibly fixing such structures, so that ordered structures can be reversibly created in a liquid medium, converted to solid, and then converted back to liquid, wherein new ordered structures can be created and again fixed.

In accordance with an exemplary embodiment, a method of creating colored materials, comprises: fixing ordered structures of magnetite nanoparticles within a media, such that the ordered structures diffract light to create colors.

In accordance with another exemplary embodiment, a method of generating multicolored patterns comprises: fixing a structural color from a superparamagnetic collidal nanocrystal clusters (CNC or CNCs); and introducing a high resolution patterning of multiple structural colors using a single material.

In accordance with a further exemplary embodiment, a full color printing and particle encoding based on artificial structural colors from a magnetically tunable photonic crystal, the printing and particle encoding comprises: a plurality of magnetite nanoparticles; ethanol; and a photocurable resin.

In accordance with another exemplary embodiment, a method of forming magnetochromatic microspheres comprises: coating a plurality of magnetite nanocrystals with a medium; dispersing the plurality of coated magnetite nanocrystals in a curable solution; placing the magnetite nanocrystals and curable solution in an immiscible solution to form an emulsion; exposing the emulsion to an external magnetic field, which aligns the coated magnetite nanocrystals in one-dimensional chains within emulsion droplets within the curable solution; and curing the emulsion droplets within the curable solution into magnetochromatic microspheres.

In accordance with a further exemplary embodiment, a magnetochromatic composition formed by the method as recited above, and wherein the composition is used for a color display, signage, bio and chemical detection and/or magnetic field sensing.

In accordance with another exemplary embodiment, a method of forming magnetochromatic microspheres comprises: a simultaneous magnetic assembly and UV curing process of an emulsion system comprised of superparamagnetic Fe₃O₄@SiO₂ colloidal particles, which are self-organized into ordered structures inside emulsion droplets of UV curable resin.

### BRIEF DESCRIPTION OF THE DRAWINGS

FIG. 1(a) is a schematic illustration of the mechanism for generating multiple structural colours with a single material, wherein FIG. 1(a) shows the main concept of immobilization of structure of CNCs in photocurable resin having a superparamagnetic core and ethanol solvation layer allows the stable dispersion of the CNCs in the liquid resin, and upon the application of an external magnetic field, CNCs are assembled to form chain-like photonic crystal, and UV exposure instantaneously fixes the ordered structure in polymeric matrix.

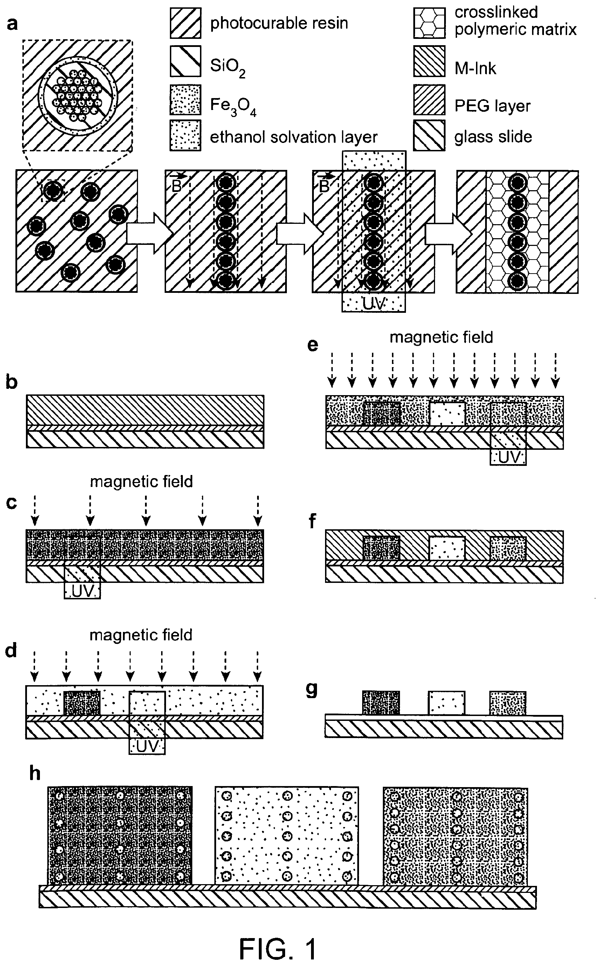

FIGS. 1(b)-1(g) are schematic illustrations of the multicolour patterning of structural colour with single material by a sequential action of "tuning and fixing", and wherein the diffraction wavelength is tuned by varying the strength of magnetic fields, and spatially patterned UV light polymerizes the photocurable resin and fixes the position of ordered CNCs; and wherein after polymerization, remnant liquid resin is washed away with unreacted PEG-DA monomer solution; and wherein FIG. 1(h) shows the mechanism for creation of various colours from a single ink; and wherein the UV curing of the M-ink under magnetic fields with different strengths can freeze the chain-like assemblies with different inter-particle distances which determine the diffracted wavelength of light: shorter diffracted wavelength for shorter interparticle distance.
FIG. 2(a) is a reflection micrograph of multicoloured structural colour generated by gradually increasing magnetic fields, and wherein the microstructure (i) is generated under no magnetic field, and microstructures (ii) to (viii) are generated under gradually increasing strength of magnetic field from 130G to 700G.
FIG. 2(b) is a transmission micrograph of the same sample of FIGS. 2(a) and 2(c), and the corresponding spectra of the microstructures, and wherein the microstructure (i) does not show any diffraction peak in the visible range, and wherein the microstructures (ii) to (viii) show the shift of the diffraction peak to the shorter wavelength, and wherein the scale bars is as follows: 100µm in FIGS. 2(a), 2(b), 2(e), 2(f); 1µm in FIG. 2(d), and 250µm in FIGS. 2(g)-2(i).
FIG. 2(d) is an SEM image of the sliced cross section of a photocured sample, and wherein the dimpled surface profile shows the traces of chain-like ordering of CNCs.
FIG. 2(e) is an SEM image of concentric patterns of a triangle, a square, a pentagon and a circle.
FIG. 2(f) is an SEM image of multicoloured barcodes.
FIG. 2(g) is an SEM image of a composite pattern of strip and polygon.
FIGS. 2(h) and 2(i) are reflection and transmission micrographs, respectively of a tree.
FIGS. 3(a)-3(g) show reflection intensity modulation and spatial colour mixing of structural colour, and having a scale bars as follows: 250µm in FIG. 3(a) and 3(d), and 100µm in FIG. 3(g).

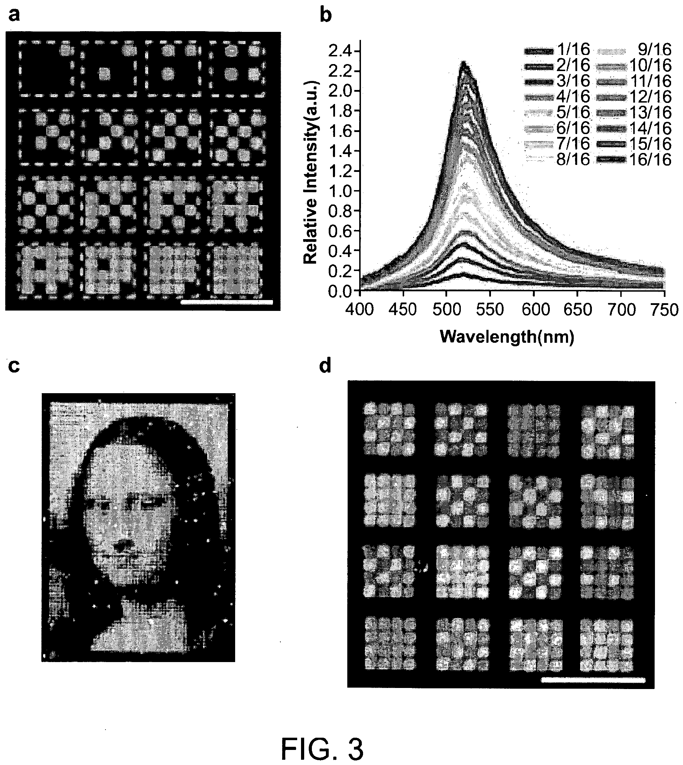

FIG. 3(a) is a 4-bit reflection intensity modulation by the varying number of monotone structural colour dots, and wherein each of the red dotted lines stands for a pixel which shows distinct level of reflection intensity.
FIG. 3(b) is a reflectance spectrum of the corresponding 16 pixels of FIG. 3(a).
FIG. 3(c) is a monotone 4-bit image of *Mona Lisa* which consists of 4800 pixels.
FIG. 3(d) is a spatial colour mixing of structural colour, wherein each pixel of 4 X4 matrix consists of different colour dots, and each of which is size of approximately 25µm.

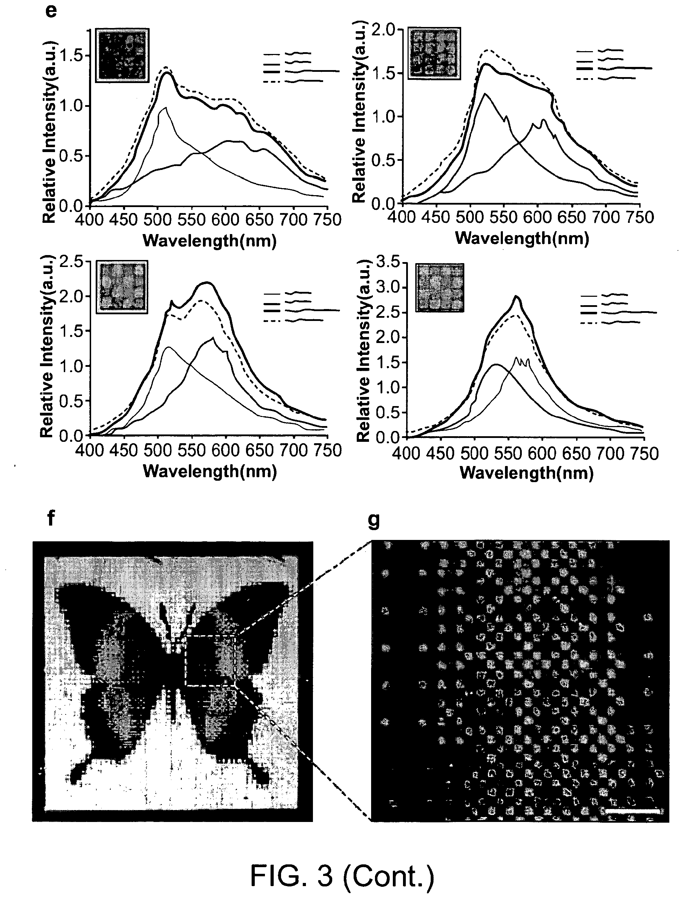

FIG. 3(e) is a corresponding reflectance spectra of selected pixels in FIG. 3(d) (inset), and wherein the green line in the spectra stands for the spectrum of (1,1) component of the pixel, orange line for the (1,2) component, gray line for the mathematical addition of the green and orange line, and blue line for the normalized spectrum of full pixel.
FIG. 3(f) is a reproduction of butterfly, *Papilo Palinurus,* and wherein the colour of wings in the reproduced image shows structural colour mixing by mixing blue and yellow-green.
FIG. 3(g) is a magnification of wing area of FIG. 3 (f), which consists of blue and yellow-green dots, and wherein each dot is the size of 16.7x16.7µm² (∼1500 DPI).

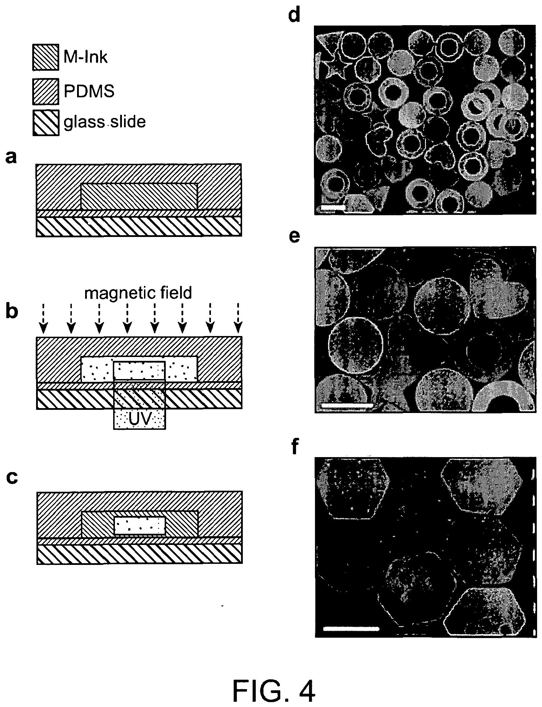

FIGS. 4(a)-4(f) show colour and shape encoded particles fabricated in microfluidic environment using a single ink, wherein FIGS. 4(a)-4(c) are schematic diagrams for generating encoded particles using M-Ink in PDMS microfluidic channels; FIG. 4(d) is a free floating encoded particle with various shape and colour around the PDMS anchor area; FIG. 4(e) is an enlarged micrograph of FIG. 4(d), showing closely packed particles with various colour and shape; and FIG. 4(f) are heterogeneously encoded particles embedded with small colour dots. Scale bars: 200µm in FIG. 4(d)-4(f).

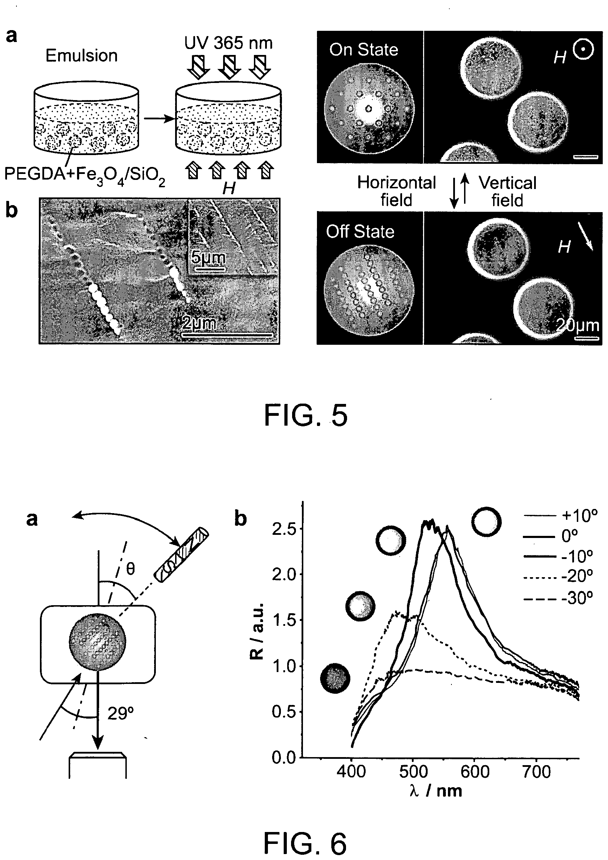

FIG. 5(a) is a schematic of a synthetic procedure for the magnetochromatic microspheres, where when dispersed as emulsion droplets, superparamagnetic Fe₃O₄@SiO₂ core-shell particles self-organize under the balanced interaction of repulsive and attractive forces to form one-dimensional chains, each of which contains periodically arranged particles diffracting visible light and displaying field-tunable colors, and UV initiated polymerization of the oligomers in emulsion droplets fixes the periodic structures inside the microspheres and retains the diffraction property.
FIG. 5(b) is an SEM image of Fe₃O₄@SiO₂ particle chains embedded in a PEGDA matrix.
FIG. 5(c) are schematic illustrations and optical microscopy images for the magnetochromatic effect caused by rotating the chain-like photonic structures in magnetic fields.
FIG. 6(a) is a schematic illustration of the experimental setup for studying the angular dependence of the diffraction property of the magnetochromatic microspheres.
FIG. 6(b) is a reflection spectrum and corresponding digital photo recorded from a single Fe₃O₄@SiO₂/PEGDA microsphere at different tilting angles.

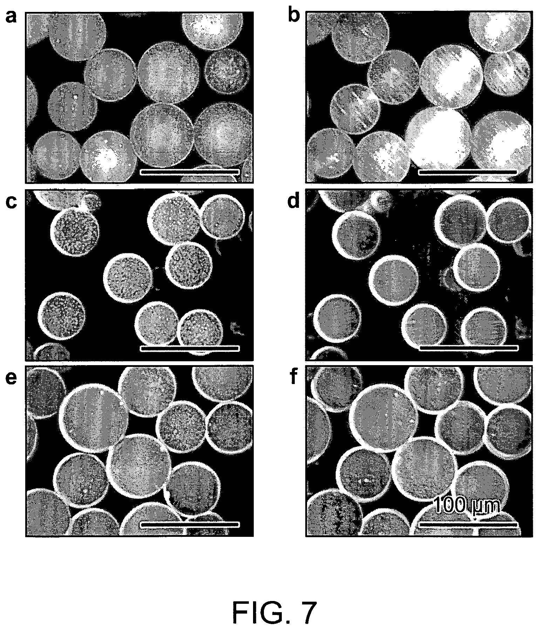

FIGS. 7(a)-7(f) are optical microscopy images (500x) of magnetochromatic microspheres with diffractions switched between "on" (a, c, e) and "off" (b, d, f) states by using external magnetic fields, and wherein these microspheres were prepared using (a, b) 127, (c, d) 154, and (e, f) 197 nm Fe₃O₄@SiO₂ colloids.

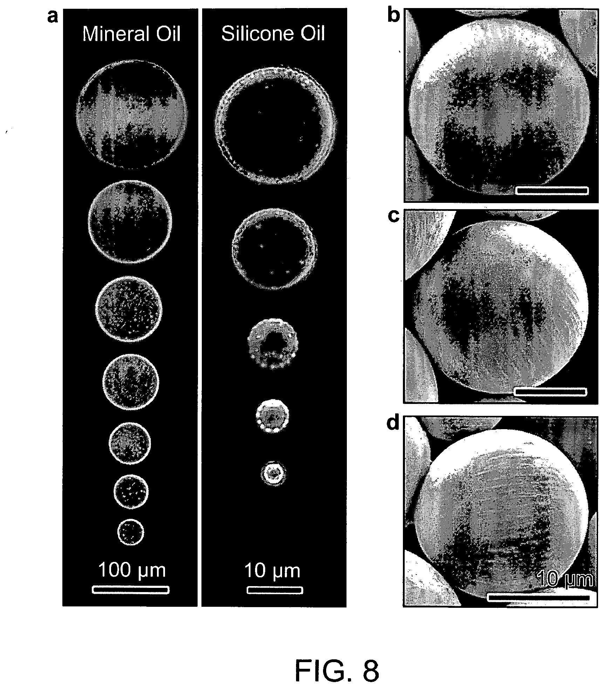

FIG. 8(a) are dark-field optical microscopy images of a series of Fe₃O₄@SiO₂/PEGDA microspheres with diameters from approximately 150 µm to 4 µm, and wherein the larger microspheres were fabricated in mineral oil and smaller ones in silicon oil.
FIGS. 8(b)-8(d) are top view to side view SEM images of the microspheres, showing some of the Fe₃O₄@SiO₂ particle chains aligned on the surface along the longitudinal direction, and wherein it should be noted that a plurality of particle chains are embedded inside the microspheres, with only ends occasionally observable in the top view image (b).

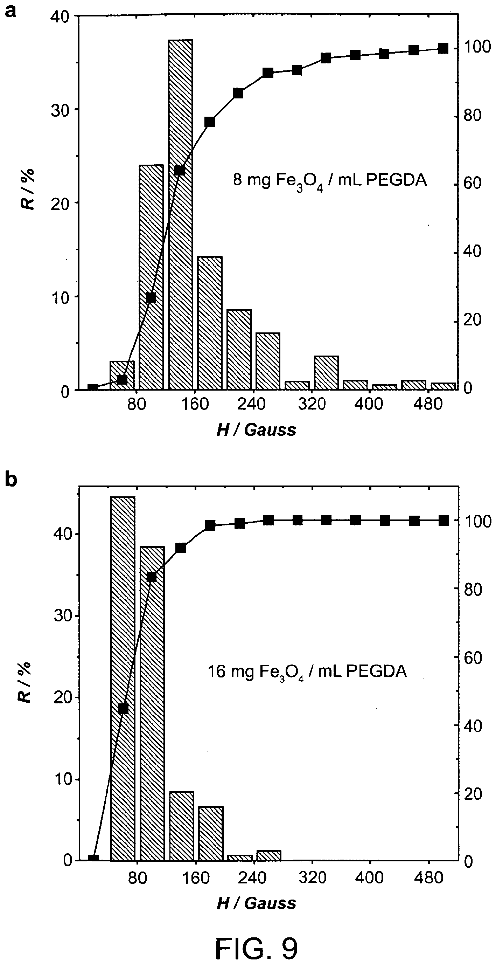

FIGS. 9(a)-9(b) are statistical diagrams showing the turning threshold of field strength for Fe₃O₄@SiO₂/PEGDA microspheres with different loadings of magnetic particles, wherein FIG. 9(a) is 8 and FIG. 9(b) is 6 mg Fe₃O₄/ml PEGDA, and wherein the diagrams show the percentage of viewable area which is turned on at certain field strengths, and the corresponding accumulative curves.

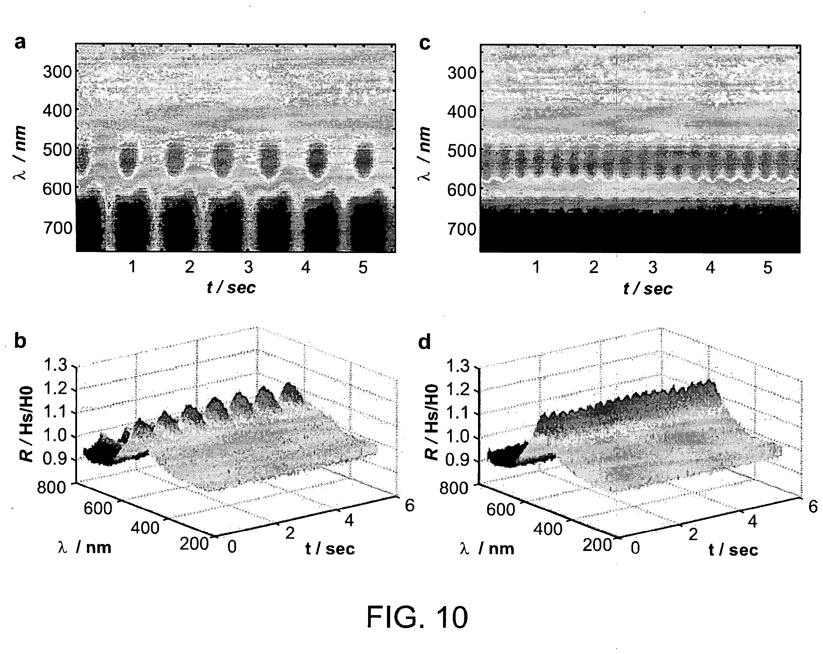

FIGS. 10(a)-10(d) are schematic diagrams of the optical response of Fe₃O₄@SiO₂/PEGDA microspheres in a (a, b) 1.22 and (c, d) 3.33 Hz vertical/horizontal alternating magnetic field, wherein Hs/Ho is the ratio of reflection with H field to that without H field.

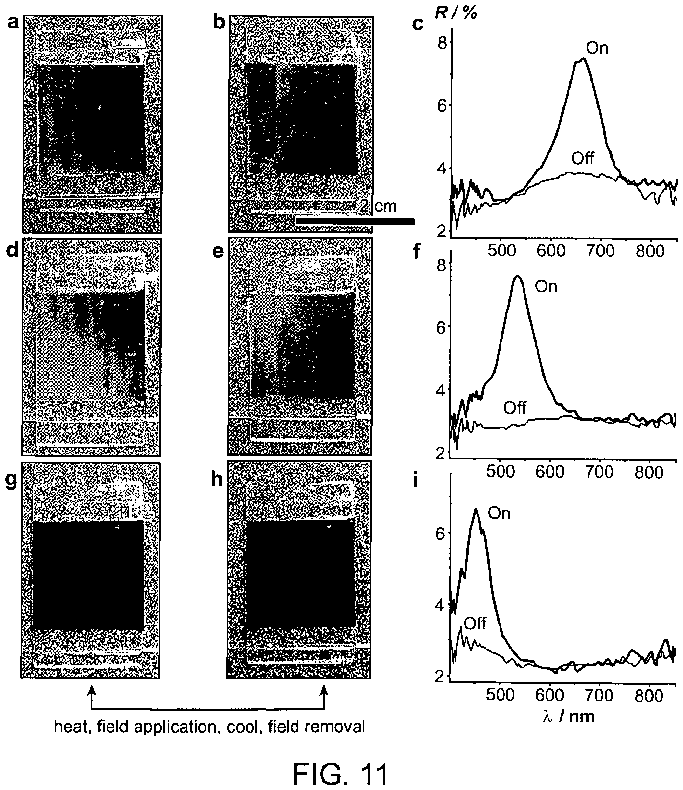

FIGS. 11(a)-11(i) are digital photos and reflection spectra of three types of Fe₃O₄@SiO₂/PEGDA microspheres loaded in 1.8 × 1.8 × 0.1 cm glass cells filled with PEG (Mw = 1500), wherein the diffraction is switched on (a, d, g) or off (b, e, h) by melting the PEG matrix, rotating the microspheres with a magnetic field, and finally cooling down the PEG matrix to lock the sphere orientation such that bistable states can therefore be maintained in the absence of magnetic fields, and the corresponding reflection spectra (c, f, i) display diffraction peaks at the "on" stage and none at the "off" stage.

### DETAILED DESCRIPTION

The invention described herein provides various methods of fixing the ordered structure by (1) using an external magnetic field to create ordered structures of photonic crystals in a liquid medium, and (2) converting the liquid medium to a solid medium to preserve the ordered structure, such that it remains when the external magnetic field is removed.

In accordance with an exemplary embodiment, the media (or medium) of the invention can be any media or medium capable of phase change from a liquid to a solid phase. Transparent, semi-transparent, or translucent medium is preferred. Exemplary media include, but are not limited to UV curable resins, such as polyethyleneglycol diacrylate (PEGDA) oligomers in combination with trace amount of photo initiator 2,2-Dimethoxy-2-phenylacetophenone (DMPA), acrylic, epoxy, polyester, stereolithography resins, or other liquid media capable of being converted to a solid upon exposure to UV light. The media of the invention further comprise light- curable, temperature-curable, air-curable, and energy-curable liquid media capable of being converted to solid form. In accordance with an exemplary embodiment, the invention further comprises media which can be reversibly converted from liquid to solid and back to liquid, such as that described in "CARIVERSE resin: a thermally reversible network polymer for electronic applications" Chang, et al, Electronic Components and Technology Conference, 1999. 1999 Proceedings. 49th Volume , Issue , 1999 Page(s):49 - 55 Polyethelene glycol films (polyethylene glycol films), and/or paraffin.

In accordance with an exemplary embodiment, the media (or medium) of the invention can comprise a film, beads, microspheres, and any 3-dimensional shape which is desired.

The invention consists of ordering the photonic crystals within the media (or medium) using an external magnetic field to attain a desired spacing which will create a desirable color by diffracting light, and then subjecting the medium to conditions which cause it to convert to a solid, which solidifies and fixes the photonic crystals in the ordered structure such that the color is preserved.

In some embodiments, the solidification of the media (or medium) results is done in bulk, in other embodiments the solidification is performed on very small scales to create and fix local regions of color, creating fine features and the ability to create multi-colored patterns.

Provided herein are two exemplary embodiments of the invention. The first is a method of creating detailed multicolored patterns by local tuning and fixing of ordered structures. The second is a method of creating microspheres containing fixed ordered structures. Further provided is a method of creating a display using ordered structure containing microspheres.

### FULL COLOUR PRINTING AND PARTICLE ENCODING BASED ON ARTIFICIAL STRUCTURAL COLOURS FROM A MAGNETICALLY TUNABLE PHOTONIC CRYSTAL

It can be appreciated that many creatures in nature, such as butterflies, beetles, and peacocks display unique iridescent and metallic colors (or colours), known as "structural colors" or "structural colours", which result from the light interaction with periodic nanostructures on their surface¹⁻⁶. Without relying on multiple pigments or dyes, various colored patterns are cleverly produced using a single structural material by simply altering the dimension of the nanostructures. Cost-effective and scalable implementation of this feature in manufacturing would greatly simplify production of multicolored goods such as electronics, displays, and vehicles. There have been many attempts to produce artificial structural colored patterns using various bottom-up and top-down techniques in a variety of research fields⁷⁻²². However, mimicking such nanostructures found in the natural world requires state-of-the-art nanofabrication techniques that are expensive and not scalable. Especially, production of multi-colors and patterning of such structure were not possible with a single structural material.

A high resolution patterning and artificial production of multiple structural colors based on successive tuning and fixing the structural color of a single structural material is demonstrated in accordance with an exemplary embodiment. In accordance with another exemplary embodiment, a color tunable structural material, whose color is magnetically tunable and lithographically fixable is disclosed. Using photonic crystals, a curable resin, and a specially designed lithographic instrument, fine nanostructures for scalable production of a structural color can be generated, tuned the color through the entire visible spectrum by magnetically changing the dimension of the nanostructures, and immobilized the nanostructures lithographically to produce patterns with arbitrary spatial arrangements of color. In addition, in accordance with a further embodiment, two applications of the disclosed system including high resolution color patterning for printing and micro-scale particle encoding for bio-assays are demonstrated. With the superior scalability and simplicity, the multicolor production scheme as disclosed herein can have a significant impact on the color production for both special instruments and general consumer goods.

It can be appreciated that structural colors in nature such as butterfly wings, beetle cuticles and peacock feathers have attracted considerable attention in diverse research areas¹⁻⁶. Structural color shows many characteristics different from chemical pigments or dyes. For example, as can be found in the feathers of a peacock, various colors result from the interaction of light with a single biological material, melanin rods, and its iridescent colors can be determined by the lattice spacing of the rods⁵. In nature, a single biological material with different physical configurations displays various colors and it greatly simplifies the manufacturing process to produce multiple colors. The unique colors originating from the physical structures are iridescent and metallic, and cannot be mimicked by chemical dyes or pigments. Also, structural color is free from photobleaching unlike traditional pigments or dyes.

Due to its unique characteristics, there have been many attempts to make artificial structural color through various technological approaches such as colloidal crystallization⁷⁻¹⁸, dielectric layer stacking^{19,20} and direct lithographic pattering^{21,22}. Colloidal crystallization technique is most frequently employed to make a photonic crystal, which blocks a specific wavelength of light in the crystal and therefore displays the corresponding color. Gravitational force⁷, centrifugal force⁸, hydrodynamic flow⁹, electrophoretic deposition¹⁰ and capillary force from the evaporation of solvents¹¹⁻¹⁸ are utilized to assemble the colloidal crystals. Although these methods produce structural colors with large-area, the growth of colloidal crystals usually takes a long time for better crystallization and fewer defects. Also, since the band gap of a photonic crystal is dependent on the size of colloids, different sizes of colloidal suspensions are needed to produce multicolored structures. Furthermore, there have been great technological difficulties in assembling colloids of different sizes to form multicolored patterns with fine resolutions.

Dielectric layer stacking and lithographic pattering of periodic dielectric material generate structural color by directly controlling the submicrometer structure of the surface. Diverse fabrication processes were reported such as replicating natural substrates¹⁹, depositing materials layer by layer²⁰ and etching substrate using various lithographic techniques^{21,22}. These approaches are advantageous in that they accurately fabricate periodic dielectric structure on the surface, which controls the desired photonic band gap. However, in spite of the advantage of sculpting sophisticated nanostructures in a well controlled manner, a cost-effective manufacturing scheme to generate multicolored structures over a large area is hard to achieve due to the requirement of a vacuum process. Moreover, great effort is necessary to produce multicolored patterns on a substrate since different pitches of dielectric stacks are required for different colors.

Recently, dynamic tuning of structural color with a single material has been demonstrated by exerting an external magnetic field on a solution of photonic crystals. This magnetically tunable photonic crystal shows broad tunability in its photonic band gap covering the whole visible spectrum and has a fast response time^{23,24}. However, the color of this material cannot be fixed permanently because the external magnetic field is required to maintain structural order. If one could instantaneously 'freeze' the photonic crystal structure of the photonic crystals with great spatial resolution, the artificial patterning of various structural colors with a single material would be possible.

In accordance with an exemplary embodiment, an instantaneous fixing of structural color from photonic crystals and introduce high resolution patterning of multiple structural colors using a single material, is described herein. Both material system and special instrumentation are developed to overcome the limitations of the previous approaches to produce artificial structural colors. In accordance with an exemplary embodiment, the applications of this promising technology: structural color printing for design materials and structural color encoded particles for biochemical assay are disclosed.

It can be appreciated that it would desirable to generate multicolored patterns with high resolution using a single material by repetitive tuning and fixing the structural color from the mixture of superparamagnetic photonic crystals and photocurable resin (FIG. 1). In accordance with an exemplary embodiment, the superparamagnetic photonic crystals, each consisting of many single domain magnetite nanoparticles, which are capped in a shells, which is preferably a silica shell²⁴. It can be appreciated that the superparamagnetic photonic crystals are any composition which can form ordered structures when exposed to an external magnetic field, such that the ordered structures diffract light to create color. preferably the photonic crystals are composed of magnetite (Fe₃O₄). In addition, the magnetite nanoparticles can be coated in shells of other suitable mediums, including but not limited to silica, titania (titanium oxide), and/or polymers such as polystyrene and polymethylmethacrylate. The coating process provides a means to obtain good dispersibility and promotes solvation repulsion in the photocurable solution or resin. The polymers such as polystyrene and polymethylmethacrylate can be used after a necessary surface modification. In accordance with an exemplary embodiment, the thickness of the silica coating can be controlled by controlling the amount of silane precursors or the catalyst. The thickness control can be found in (1) Ge, J. and Yin. Y., "Magnetically Tunable Colloidal Photonic Structures in Alkanol Solutions", Adv. Mater., 2008, 20, 3485-3491. (2) Yin, Y.; Lu, Y.; Sun, Y. and Xia, Y., "Silver Nanowires Can Be Directly Coated with Amorphous Silica to Generate Well-Controlled Coaxial Nanocables of Silver/Silica", Nano Lett. 2002, 2, 427-430.

It can be appreciated that in accordance with an exemplary embodiment, in solution, the magnetite particles are attracted to each other and will aggregate unless treated to create balancing repulsive forces. Such balancing forces can be created by solvating the particles in a solution with a positive charge, which will repel neighboring positively charged particles. Alkanols, ethanol, and other solvation solvents can be used for this function. Alternatively, coatings can be applied to the particles to create optimal repulsive forces to balance the attraction the magnetite particles will have for each other. For example, the compositions and methods described in United States Provisional Patent Application Serial Number 61/154,717, "Assembly of magnetically tunable photonic crystals in nonpolar solvents," can be employed to produce particles with the proper balance of attractive and repulsive forces.

Without an applied external magnetic field, the photonic crystals are randomly dispersed in the photocurable resin and display a brown color which is the intrinsic color of magnetite. Under the external magnetic field, the photonic crystals are assembled to form chain-like structures along the magnetic field lines^{25,26}. Attractive magnetic force due to the superparamagnetic core is balanced with repulsive solvation force, both of which determine the inter-particle distance. The inter-particle distance in a chain determines the color of the light diffracted from the chain, which can be explained by Bragg diffraction theory. Thus, the color can be tuned by simply varying the inter-particle distance using external magnetic fields of varying strength. Once the desired color is obtained, it can be fixed by solidifying the photocurable resin through UV exposure. The particle chains can be frozen in the solidified polymer network without distorting its periodic arrangements, thus retaining the structural color.

However, the above fabrication scheme previously could not be achieved because of the difficulty of maintaining the tunability of photonic crystals in photocurable resin and the instantaneous immobilization of the chain structure. A simple dispersion of CNCs in photocurable resin does not possess strong and long-range repulsive inter-particle forces that can cooperate with the magnetically induced attractive force to allow dynamic tuning. Without a strong repulsion, the photonic crystals irreversibly aggregate with each other when they are pushed together upon application of the external magnetic fields^{27,28}. A strong hydrogen bonding solvent such as Alkanols can form a relatively thick solvation layer around the particle surface which can provide strong repulsion when two solvation layers overlap²⁴. In accordance with an exemplary embodiment, the problem of aggregation and dynamic assembly in photocurable resin has been solved by adding a small amount of ethanol to the system. It can be appreciated that this three phase system, composed of photonic crystals, ethanol, and photocurable resin, can successfully stabilize the photonic crystals and maintain the color tunability (FIG. 1(a)). Once the photonic structures are fixed, the gradual evaporation of ethanol will not disturb the structural color.

The second challenge was to develop a rapid solidification process to prevent distortion of photonic nanostructure²⁹. In accordance with an exemplary embodiment, a photopolymerization can be used to achieve lithographic high resolution patterning of the photonic crystals. In comparison to the other solidification methods such as thermal curing, photocuring is instantaneous and can rapidly fix the color of the photonic crystals achieved by tuning the external magnetic field. Because of its instantaneous nature, photocuring also allows localized solidification for high resolution patterning by avoiding significant free-radical diffusion during polymerization³⁰, making it possible to use techniques such as optofluidic maskless lithography (OFML)³¹ for creating desired microscale patterns. Any UV or directed energy system capable of creating localized polymerization or curing of liquid media to solid can be used. In accordance with an embodiment, poly(ethylene glycol) diacrylate (PEG-DA or PEGDA) with a photoinitiator (2,2-dimethoxy-2-phenylacetophenone) can be used as the photocurable resin. Other suitable photocurable resins include ethoxylated trimethylolpropane triacrylate (ETPTA), PEG-DA of various molecular weights (Mw: 258, 575, 700), 2-hydroxyethyl methacrylate (HEMA), methylmethacrylate (MMA), acrylamide (AAm), allyamine (AM), and/or any combination thereof.

In accordance with another exemplary embodiment, the instantaneous illumination of focused UV energy has been achieved by exploiting the previously reported OFML system, a versatile tool for dynamically generating heterogeneous microstructures by *in-situ* photopolymerization in microfluidic environment. Fast microelectromechanical system (MEMS) based spatial light modulator inside the system provides instantaneous illumination (less than (<) 80ms) of patterned UV light to the photocurable resin^{31,32}. Using this system, the chain structure can be preserved without distortion. Compared with the traditional methods for generating structural color by the slow growth of colloidal photonic crystals, the magnetic assembly followed by photopolymerized immobilization can be accomplished within seconds with a high degree of spatial control.

Various multicolored patterns can be generated with a single material by a sequential process involving cooperative actions of magnetic field modulation and spatially controlled UV exposure (FIG. 1(b)-(g). In accordance with an exemplary embodiment, a PEG coated glass slide was used as a substrate to avoid adhesion of the photonic crystals onto the surface of a bare glass slide. A thin layer of photonic crystals in curable liquid resin is then deposited on the substrate (FIG. 1(b). Once a desired color of the photonic crystals is obtained by exerting a magnetic field, the patterned UV exposure fixes the color locally, producing a colored pattern at specific regions (FIG. 1(c)). Then, the color of uncured liquid resin is changed by simply varying the strength of magnetic field. Subsequent controlled UV exposure produces another colored pattern in a different location (FIG. 1 (d)). As illustrated by FIG. 1(b)-1(g), micropatterns with different structural colors (FIG. 1(h)) can be easily formed by repeating this "tuning and fixing" process. No movement of substrate is required for deposition of multiple ink materials since the photonic crystal solution is deposited only once at the beginning of the process. Also multiple patterns can be exposed without movement of both substrate and mask since the OFML system dynamically controls the pattern of multiple UV exposure without the need of changing physical photomasks. Therefore, the methods as described herein combine the advantages of photonic crystals and OFML, and can achieve high resolution heterogeneous patterning rapidly by eliminating the need for alignment and registration.

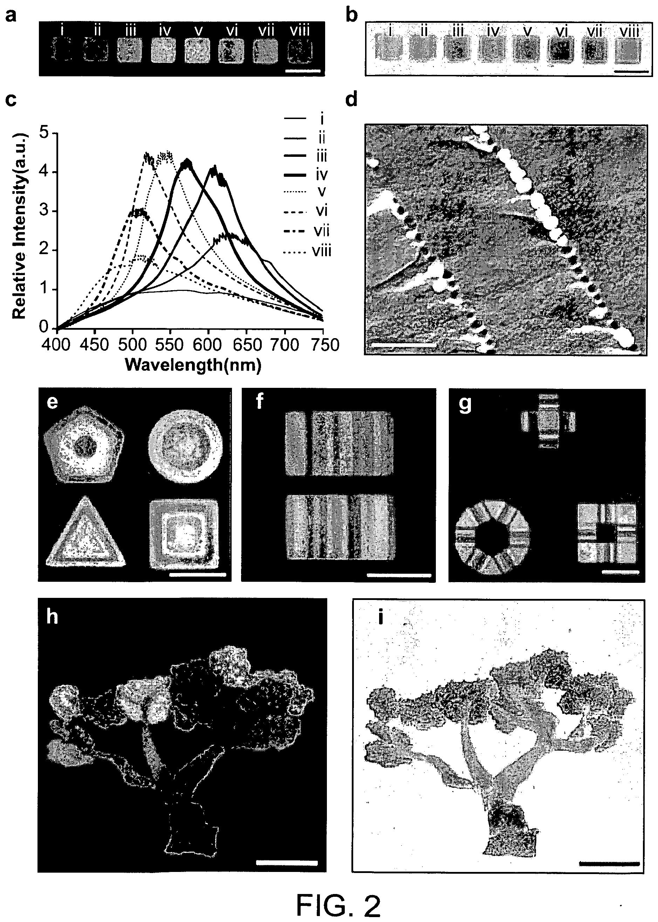

In order to demonstrate the concept of generating structural color with a single ink, multicolor structures were fabricated by the method as described above. The reflective optical microscope image (FIG. 2(a)) and the corresponding spectrum data (FIG. 2(c)) of each microstructure shows gradual color changes from red to blue as the applied magnetic field strength is gradually increased. This gradual increase in external magnetic field induces increasing attractive force between the induced magnetic dipole moment of photonic crystals, thereby decreasing the inter-particle distance in a chain. In agreement with the Bragg diffraction theory, the spectra blue shift as the result of the gradual decrease in the inter-particle distance. It is worth noting that this tuning of the colors of photonic crystals does not suffer from hysteresis and is very reproducible due to the paramagnetic nature of photonic crystals. Furthermore, the wide tuning range covering the whole visible spectrum is owing to the strong magnetic attractive force from the superparamagnetic property of photonic crystals as well as the repulsive forces with comparable strength. In this case, the repulsion is composed of the relatively weak but long-range electrostatic force and the relatively strong but short-range solvation force resulting from the ethanol solvation layer of the photonic crystals. Colors of the corresponding microstructures shown in the transmission microscope (FIG. 2(b)) are all brownish, the intrinsic color of magnetite, which are quite different from those of the reflective optical microscope image. This unique difference between the reflection image and the transmission image further proves the formation of structural color, whose coloration mechanism is not based on the absorption of light like typical pigments and dyes. Since the photonic crystal structure can be frozen within the polymeric matrix, the chain structures directly were confirmed, which usually de-assembles in solution after removal of the magnetic field. As shown in FIG. 2(d), a scanning electron microscope (SEM) image of the sliced cross section with laser microtome of the cured resin reveals that the diffraction of structural color does come from the periodic arrangement of the particles in the chain. The dimpled structures of the sliced cross sectional plane are the traces of the ordered photonic crystals. Also, this shows that the photopolymerization by OFML preserves the original chain structure formed in the liquid phase.

By controlling the UV exposure pattern and magnetic field strength as described in FIG. 1, it can be appreciated that a high resolution patterning of multiple structural colors with different geometries and colors can be produced. FIG. 2(e) shows four different multicolored patterns, and each of them is fabricated with five concentric UV patterns under various magnetic field intensities. Furthermore, barcoded microstructures composed of sixteen colorful strips are also fabricated by sixteen sequential exposures (FIG. 2(f)). It can be appreciated that there is no alignment error since there is no movement of the substrate during the exposure. The width of the bar code is only 10 µm which shows high resolution spatial patterning of structural colors. Spatial positioning of a smallest feature of structural color depends on the size of diffracting unit and resolution of the lithography. Since the size of CNCs (approximately 170 nm) is smaller than the resolution of our optical system, the spatial positioning of the structural color is mainly determined by the resolution of the optical system, which can be enhanced up to the limit of typical optical lithographic resolutions³³. Colorful heterogeneous microstructures of any desired shape and color are easily achieved as shown in FIGS. 2(g)-2(i).

For detailed depiction of an image, not only producing structural color of single color depth as shown in FIG. 2, but also grayscale modulation and color mixing are required to broaden the ability of color expression. The proposed scheme of generating structural color can easily be merged with well developed reprographic techniques such as halftoning and dithering^{34,35}, and broaden the capability of color expression. Current digital reprographic technique expresses grayscale by varying density of dots in a pixel which is smaller than the human eye's resolution. In accordance with an exemplary embodiment, analogous to traditional grayscale expression, the overall reflection intensity can be modulated by the number of color dots, and present similar grayscale effects. For the proof-of-concept demonstration, 16 pixel arrays were generated, and each of them consists of 25µm×25µm dots whose configuration is based on the Bayer pattern³⁴ (FIG. 3(a)). Reflection intensity shown in FIG. 3(b) verifies 16 distinct intensity levels of corresponding pixel arrays. As an example for reflection intensity modulation, as shown in FIG. 3(c) a 4-bit monotone image of *Mona Lisa,* a 16th century Italian portrait by *Leonardo da Vinci* was reproduced. Reflection intensity of each pixel is modulated by varying the density of dots with 16 levels.

Besides the reflection intensity modulation, spatial color mixing can be achieved by parallel distribution of color dots. Quantized dot arrays composed of different colors can be seen as a single mixed color when their size is below human eye's resolution. To demonstrate spatial color mixing of the structural color, a 16 pixel arrays was fabricated (FIG. 3(d)), and each pixel is composed of 16 dots of 2 or 3 different colors. Spectrum of color mixed pixel (FIG. 3(e)) shows that simple summation of the two different color spectrum results in the total reflection spectrum, proving the spatial mixing of the distinct structural colors. It can be appreciated that this simple spatial mixing scheme of structural color exists in nature. An Indonesian butterfly, *Papilo Palinurus,* shows green on its wings, which results from the spatial mixing of structurally colored blue and yellow². Following the scheme of spatial color mixing, as shown in FIG. 3(f), a butterfly was artificially reproduced, *Papilo Palinurus* by biomimetically mixing structural colors from created by small dots of photonic crystals fixed at different colors. Magnification of the printed wing area at FIG. 3(f) shows different color dots, and each of which is the size of 16.7 x 16.7µm² and well below the regular human eye's resolution so that spatially distributed dots can be seen as a single mixed color. Spatial color mixing makes it possible to broaden the expression range of structural color. It can be appreciated that a realizable possibility of structural color printing with fine resolution can be achieved with the described technique.

By exploiting the capability of precise color and shape patterning with a single material, producing structural colors are not limited to the fixed structure on the substrate, but can be expanded to the free floating microstructures in a microfluidic environment as color and shape encoded particles. In the field of analytical chemistry and bioscience, multiplexed assays in microfluidic environments have attracted much attention due to their capability for high throughput screening for drug discovery and gene expression profiling with precise controllability of a small volume of reactants. Various techniques to generate encoded particles have been reported such as semiconductor quantum dots^{36, 37}, metallic barcode³⁸, and dot-coded particles³⁹. In contrast to the case of quantum dot coding where precise loading of quantum dots of different sizes is required to produce distinct encoded particles, encoding with the invention has the advantage of simultaneous shape and color coding in a single step by using a single material in a microfluidic environment.

In microfluidic channels made of polydimethylsiloxane (PDMS) and PDMS coated glass substrate, by virtue of an oxygen lubricating layer, microparticles generated by free-radical photopolymerization can move along the flow stream without being stuck to the channel walls⁴⁰. Using this property, various color and shape encoded particles can be generated under distinct levels of magnetic field intensity with patterned UV light using OFML (FIG. 4(a)-4(c)). To demonstrate the concept, the liquid curable resin containing photonic crystals was injected into the microfluidic channel, and generated microparticles by *in-situ* photopolymerization guided by patterned UV light under different magnetic fields (FIGS. 4(d)-4(e)). The encoded particles are caught at the PDMS anchors and the remnant liquid resin is washed out with PEG-DA monomer solution. Morphologies of these structures are not restricted to regular polygonal shape, but can be designed to any desired shape as displayed in FIG. 4. Heterogeneous encoded particles embedded with smaller color dots were generated by sequential UV exposure under various magnetic fields (FIG. 4(f)). The expression of graphical code, similar to the pattern shown in FIG. 2, is limitless due to the flexibility of controlling colors and shapes.

It can be appreciated that in accordance with an exemplary embodiment, a high resolution patterning of multiple structural colors by a single material has been demonstrated, of which the color is magnetically tunable and lithographically fixable. The versatile material, is developed by magnetically assembling superparamagentic photonic crystals into chain-like ordered structures in photocurable resin through the balanced interaction of magnetically induced attractive force and the repulsive forces. A unique process for immobilization of the color of photonic crystals is developed by taking advantage of the instantaneous nature of the OFML system. By combining photonic crystals , curable resin and OFML technique, two important applications in pattern printing and microparticle encoding all based on the artificial structural color of photonic crystals have been demonstrated. The described approach represents a novel multicolor patterning technique, which produces colorful patterns conveniently from a single ink instead of using many different inks for different colors. It can be appreciated that the photonic crystals based system opens a door to the wide use of structural color for various potential applications including structural colored design materials, reflective displays, and bioanalytical assay.

### METHODS

### Material

In accordance with an exemplary embodiment, the three phase mixture of photonic crystals, solvation liquid and photocurable resin is used. photonic crystals were synthesized based on previously described protocols²⁴, which were initially dispersed in ethanol. photonic crystals were collected by magnetic separation, and re-dispersed in photocurable resin without complete desiccation of ethanol. Remnant ethanol is used as a solvation liquid. In accordance with an embodiment, poly(ethylene glycol) diacrylate (PEG-DA, Sigma-Aldrich, Mₙ=258) with 5 wt% of photoinitiator (2,2-dimethoxy-2-phenylacetophenone, Sigma-Aldrich) as the photocurable resin was used. It can be appreciated that other photocurable resins can include ethoxylated trimethylolpropane triacrylate (ETPTA), various molecular weights (Mw: 258, 575, 700) of PEG-DA, 2-hydroxyethyl methacrylate (HEMA), methylmethacrylate (MMA), acrylamide (AAm), allyamine (AM) and combinations thereof or any other material capable of being converted from liquid to solid by exposure to energy of certain wavelengths. Alternatively, any material capable of being converted from liquid to solid by exposure to temperature, energy, or other factors can be used.

Mixture of photonic crystals and photocurable resin were vortexed for 5 min. For structural color printing, slide glass coated with PEG layer was made by depositing poly(ethylene glycol) diacrylate (PEG-DA, Sigma-Aldrigh, Mₙ=258) with 5 wt% of photoinitiator (2,2-dimethoxy-2-phenylacetophenone), and photopolymerize with UV light. For particle encoding, microfluidic channel was generated using the method based on standard soft lithography. Microfluidic channel with the height of 40µm was used.

### Immobilization setup

In accordance with an exemplary embodiment, a NdFeB (Neodymium Iron Boron) permanent magnet was used to generate magnetic field which was attached to the vertical stage at the microscope. For the dynamic controlling of magnetic field, an electromagnet coupled to the voltage controller was used. The photopolymerization setup used in this work was based on the optofluidic maskless lithography system³¹. Exposure pattern of UV light was controlled by digital micromirror array (DMD, Texas Instrument) synchronized with the electromagnet, pattern of DMD and UV exposure.

### Optical characterization

Optical micrographs were acquired by true-color charge coupled device (CCD) camera (DP71, Olympus) which is directly aligned to the inverted microscope (IX71, Olympus). Spectrum data was acquired by spectrometer (Acton, Princeton Instrument) which is connected to the inverted microscope (Eclipse Ti, Nikon). Built-in field stop shutter in the spectrometer was used for isolating optical signal from background noise and other neighboring particles. FIG. 3(c) and FIG. 3(f) were obtained with the commercially available digital camera (IXUS 870 IS, Canon).

### MAGNETOCHROMATIC MICROSPHERES

In accordance with an exemplary embodiment, a method of forming magnetochromatic microspheres, and more particularly to a method of forming magnetochromatic microspheres by a simultaneous magnetic assembly and UV curing process of an emulsion system comprised of superparamagnetic Fe₃O₄@SiO₂ colloidal particles, which are self-organized into ordered structures inside emulsion droplets of UV curable resin.

Photonic crystal materials with band gap property responsive to external stimuli have important applications in bio- and chemical sensors, color paints and inks, reflective display units, optical filters and switches, and many other active optical components.⁴¹⁻⁴⁹ Colloidal crystals, which can be produced conveniently by self-assembling uniform colloidal particles, have been particularly useful for making responsive photonic materials because active components can be incorporated into the crystalline lattice during or after the assembly process. The majority of research in the field therefore has been focused on tuning the photonic properties of colloidal systems through changes in the refractive indices, lattice constants, or spatial symmetry of the colloidal arrays upon the application of external stimuli such as chemical change, temperature variation, mechanical forces, electrical or magnetic fields, or light.⁴⁶⁻⁶⁶ However, wide use of these systems in practical applications is usually hampered by slow and complicated fabrication processes, limited tunability, slow response to the external stimuli, and difficulty of device integration.

Because the photonic band gap is highly dependent on the angle between the incident light and lattice planes, an alternative route to tunable photonic materials is to use external stimuli to change the orientation of a photonic crystal. For easy fabrication, actuation and broader applications, it is highly desirable that the photonic crystals can be divided into many smaller parts whose orientation can be controlled individually or collectively as needed by using external stimuli. Photonic crystal microspheres, or "opal balls", have been previously demonstrated by Velev et al. in a number of pioneering works by using monodispersed silica or polystyrene beads as the building blocks.^{67,68} The brilliant colors associated with these three-dimensional periodic structures, however, can not be tuned due to lack of control over the orientation of the microspheres. Xia et al. have introduced magnetic components into a photonic microcrystal so that its diffraction can be changed by rotating the sample using external magnetic fields.⁶⁹ However, it has not been demonstrated that one can synthesize multiple copies of such micro-photonic crystals, align them synchronically, and collectively output uniform color signals.

Accordingly, it would be desirable to have a synthetic procedure for the manufacturing of solid microspheres containing ordered structures of photonic crystals, which can be called magnetochromatic microspheres. Provided here in is an exemplary embodiment for the creation of such magnetochromatic microspheres, wherein dispersed in emulsion droplets, superparamagnetic Fe₃O₄@SiO₂ core-shell particles self-organize under the balanced interaction of repulsive and attractive forces to form one-dimensional chains, each of which contains periodically arranged particles diffracting visible light and displaying field-tunable colors. In addition, it would be desirable to have a method and/or process, which utilizes UV initiated polymerization of the oligomers in the emulsion droplets to fix the periodic structures inside the microspheres and retain the diffraction property.

In accordance with an exemplary embodiment, magnetochromatic microspheres can be fabricated through instant assembly of superparamagnetic photonic crystals inside emulsion droplets of UV curable resin followed by an immediate UV curing process to polymerize the droplets and fix the ordered structures. When dispersed in the liquid droplets, superparamagnetic Fe₃O₄@SiO₂ core-shell particles self-organize under the balanced interaction of repulsive and attractive forces to form one-dimensional chains, each of which contains periodically arranged particles diffracting visible light and displaying field-tunable colors. UV initiated polymerization of the oligomers of the resin fixes the periodic structures inside the droplet microspheres and retains the diffraction property. Because the superparamagnetic chains tend to align themselves along the field direction, it is very convenient to control the orientation of such photonic microspheres and accordingly, their diffractive colors, by changing the orientation of the crystal lattice relative to the incident light using magnetic fields. The excellent stability together with the capability of fast on/off switching of the diffraction by magnetic fields makes the system suitable for applications such as color display, signage, and sensing. In accordance with an exemplary embodiment, a display unit that has on/off bistable states can be fabricated by embedding the magnetochromatic microspheres in a matrix that can thermally switch between solid and liquid phases. It can be the matrix can be a paraffin, long-chain alkanes, esters, primary alcohols, non-crosslinked polymers such as polyethylene, poly(ethylene oxide), polyethylene-block-poly(ethylene glycol), and/or polyesters or any other material capable of being reversibly converted from liquid to solid.

It can be appreciated that among potential external stimuli, a magnetic field has the benefits of contactless control, instant action, and easy integration into electronic devices, though it has only been used limitedly in assembling and tuning colloidal crystals due to the complication of the forces that are involved.⁷⁰⁻⁷² In accordance with an exemplary embodiment, a series of magnetically tunable photonic crystal systems have been developed through the assembly of uniform superparamagnetic (SPM) colloidal particles in liquid media with various polarities.⁷³⁻⁷⁷ It can be appreciated that in accordance with an exemplary embodiment, the assembly of such photonic crystals includes the establishment of a balance between the magnetically induced dipolar attraction and the repulsions resulted from surface charge or other structural factors such as the overlap of solvation layers. This finely tuned dynamic equilibrium leads to the self-assembly of the magnetic colloids in the form of chain structures with defined internal periodicity along the direction of external field, and also renders the system fast, fully reversible optical response across the visible-near-infrared range when the external magnetic field is manipulated.

In accordance with an exemplary embodiment, a magnetically responsive photonic system has been developed, wherein photonic crystal microspheres whose orientation and consequently photonic property can be easily controlled by using external magnetic fields. In accordance with an exemplary embodiment, the fabrication of microspheres involves instant assembly of photonic crystals inside emulsion droplets of UV curable resin and then an immediate UV curing process to polymerize the droplets and fix the ordered structures. It can be appreciated that unlike "opal balls" whose orientation cannot be controlled, fixing of photonic crystals chains makes microspheres magnetically "polarized" so that their orientation becomes fully tunable as the SPM chains always tend to align along the external field direction. In addition, it can be appreciated that multiple copies of photonic crystal microspheres can be fabricated in a single process, and their orientation can be synchronically tuned to collectively display a uniform color. It can be appreciated that the photonic microsphere system as disclosed does not involve the nanoparticle assembly step, and therefore has several advantages. These advantages include long-term stability of optical response, improved tolerance to environmental variances such as ionic strength and solvent hydrophobicity, and greater convenience for incorporation into many liquid or solid matrices without the need of complicated surface modification. For example, in accordance with an exemplary embodiment, it can be appreciated that the magnetochromatic microspheres can be incorporated into a matrix, which can reversibly change between liquid and solid phases, to produce a switchable color display system whose color information can be switched "on" and "off" multiple times by means of an applied magnetic field.

The synthetic procedure of magnetochromatic microspheres in accordance with an embodiment is illustrated in FIG. 5(a). As shown in FIG. 5(a), the magnetic iron oxide or magnetite (γ-Fe₂O₃ or Fe₃O₄) SPM particles are first coated with a thin layer of silica (i.e., a medium) to obtain good dispersibility and certain solvation repulsion in the curable (or photocurable) solution. It can be appreciate that besides silica, titania (titanium oxide) and some polymer such as polystyrene and polymethylmethacrylate might be used instead after necessary surface modification. The thickness of the silica coating can be controlled by controlling the amount of silane precursors or the catalyst. The controlling of the thickness of the silica can be found in our previous publications: (1) Ge, J. and Yin. Y., "Magnetically Tunable Colloidal Photonic Structures in Alkanol Solutions", Adv. Mater., 2008, 20, 3485-3491. (2) Yin, Y.; Lu, Y.; Sun, Y. and Xia, Y., "Silver Nanowires Can Be Directly Coated with Amorphous Silica to Generate Well-Controlled Coaxial Nanocables of Silver/Silica", Nano Lett. 2002, 2, 427-430.

The silica coated Fe₃O₄ SPM particles can be dispersed in a liquid UV curable resin preferably containing mainly polyethyleneglycol diacrylate (PEGDA) oligomers and a trace amount of photo initiator 2,2-Dimethoxy-2-phenylacetophenone (DMPA). It can be appreciated that other suitable photocurable resins can be used including but not limited to ethoxylated trimethylolpropane triacrylate (ETPTA), and/or polyethyleneglycol diacrylate (PEGDA) of various molecular weights (i.e., Mw: 258, 575, 700), 2-hydroxyethyl methacrylate (HEMA), methylmethacrylate (MMA), acrylamide (AAm), allyamine (AM) and/or any combination thereof. Alternatively, any medium capable of being converted from liquid to solid such that ordered structures of photonic crystals are fixed within can be used.

The Fe₃O₄/PEGDA mixture is then dispersed in a viscous non-polar solvent (or immiscible liquid) such as silicone oil or mineral oil under mechanical stirring, which leads to the formation of an emulsion. It can be appreciated that besides silicone oil or mineral oil, the immiscible liquid can be paraffin oil or any oil immiscible liquid with the curable solution, and with appropriate density and inertness to polymerize.

Upon the application of an external magnetic field, the SPM particles self-assemble into ordered structures inside the emulsion droplets when the magnetically induced attraction reaches a balance with repulsive interactions including electrostatic and solvation forces.⁷⁶ In accordance with an exemplary embodiment, an immediate 365-nm UV illumination quickly polymerizes the PEGDA oligomers to transform the emulsion droplets into solid polymer microspheres, and at the same time permanently fixes the periodic SPM structures.⁷⁸ It can be appreciated that any suitable photolithography setup with UV light preferably in the range of approximately 240 nm (DUV) to 365 nm (I-Line) can be used with this system to fix the photonic structures in the resin (typical aligner or stepper). In addition, traditional mask-defined beam patterning usually requires mechanical movement of the physical mask so that any alignment error is inevitably incorporated. However, the Maskless-Lithography proposed has the capability of high resolution patterning over the lithography with the physical photomasks.

In accordance with an exemplary embodiment, microspheres with different colors can be obtained by controlling the periodicity of the SPM assembly through the variation of the external magnetic field during the UV curing process. It can be appreciated that due to the short-range nature of the solvation force, the range of color that can be produced from a single Fe₃O₄/PEGDA mixture can be limited.⁷⁶ However, in accordance with an exemplary embodiment, in order to produce microspheres with largely different colors such as red and blue, Fe₃O₄ particles with different initial sizes or with SiO₂ coatings of different thicknesses can be used. In accordance with an exemplary embodiment, the diameter of the microspheres typically is preferably in the range of approximately 1 µm to 300 µm, and more preferably approximately 10 µm to 100 µm, depending on the type of oil and the speed of mechanical stirring.

In accordance with an exemplary embodiment, the microspheres are preferably large than 10 micrometer (µm), which will present a consistent color, which is mainly contributed by the straight photonic chain structures inside the microsphere. However, it can be appreciated that microspheres smaller than 10 µm can be used. Once made uniformly in size, it can be appreciated that each of the microspheres should display the same color with magnetic tunability.

The fixation of the periodic SPM particles in the cured polymer matrix can be verified by inspecting a section that is cut from a sample along the chain direction. As shown in the scanning electron microscopy (SEM) image in FIG. 5(b), parallel particle chains with regular interparticle spacing can be easily observed, providing direct support of the one-dimensional ordering of the SPM particles proposed in previous studies.^{72,75,77} In accordance with an exemplary embodiment, since the cutting is not strictly along the chain direction, usually part of the chain is embedded inside the polymer and part of it has been peeled off, leaving behind regular cavities. It can be appreciated the separation between neighboring chains is typically on the order of a few micrometers due to the strong inter-chain repulsion induced by the external field.⁷⁵

The diffraction of the microspheres dispersed in a liquid can be conveniently switched between "on" and "off" states by using the external magnetic field, as shown in the schematic illustrations and optical microscopy images in FIG. 5(c). In a vertical field, the particle chains stand straight so that their diffraction is turned "on" and the corresponding color can be observed from the top. Each bright green dot in the optical microscopy image actually represents one vertically aligned particle chain. On the contrary, when the field is switched horizontally, the microspheres are forced to rotate 90° to lay down the particle chains so that the diffraction is turned off and microspheres show the native brown color of iron oxide. It can be appreciated that the particle chains can be directly observed by careful inspection of the microspheres through optical microscopy. The rotation of microspheres is instant, and synchronized with the manual movement of external fields, as supported by the videos in the supplementary information.

Depending on the direction of the external magnetic field, the particle chains can be suspended at any intermediate stage between the on/off states with a specific tilting angle (θ). In accordance with an exemplary embodiment, the dependence of diffraction peak wavelength (λ) and intensity on the tilting angle (θ) using an optical microscope coupled with a spectrometer is shown in FIG. 6. While the magnetic field is tuned within the plane constructed by the incident light and back scattered light, the diffraction from an isolated microsphere is recorded correspondingly by the spectrometer, as schematically shown in FIG. 5(a). It can be appreciated that the diffraction peak blue-shifts with decreasing intensity when the magnetic field direction is manipulated away from the angular bisector of incident light and back scattered light (θ ≈ 14.5°). FIG. 5(b) shows the spectra and corresponding microscopy images when the angle θ is tilted from +10° to -30°. Such a change in the diffraction peak position and intensity closely resembles the characteristics of a one-dimensional Bragg photonic crystal, as proven by the close match between the experimental results and theoretical simulations. Beyond -30°, the diffraction intensity is very low so that the photonic state of the microsphere can be practically considered as "off". FIG. 7 demonstrates the complete on/off switching of magnetochromatic microspheres that originally diffract blue, green and red light. These microspheres are synthesized by starting with SPM particles with average diameters of 127, 154, 197 nm. It can be appreciated that by mixing of RGB (Red, Green and Blue) microspheres in various ratios can produce a great number of colors that can be collectively perceived by human eyes.

In accordance with an exemplary embodiment, the average size of the microspheres can be controlled using the simple dispersing process through the choices of the oil type and the speed of mechanical stirring. It can be appreciated that several methods including those using microfluidic devices are available to produce monodispersed microdroplets.⁷⁹⁻⁸³ In general, using high speed stirring and viscous oils leads to the formation of smaller emulsion droplets. The microspheres prepared in mineral oils have average diameters above 50 µm, and those prepared in silicone oils have average diameters less than 30 µm.

FIG. 8(a) shows a series of dark-field optical microscopy images of differently sized microspheres selected from the samples made by using the same Fe₃O₄/PEGDA mixture but with either mineral oil or silicone oil as the continuous phase. Vertical external fields are applied so that these microspheres are all at the "on" state. Microspheres larger than 10 µm containing particle chains with spacing such that they reflect red light all display the expected red color, which comes from the diffraction of a plurality of vertically aligned particle chains. Bright red dots, which contribute to the overall production of red color, can be clearly observed inside the microspheres when they are imaged at higher magnification. However, in the case of microspheres 10 µm and smaller containing similarly spaced particle chains, fewer red dots can be observed in the center. Instead, contribution of the diffraction from the edge to the overall color of the microspheres gradually increases, with a progressive blue-shift from orange to yellow and eventually yellow-green as the microsphere size is reduced. This phenomenon can be explained by the unique self-assembly behavior of SPM particles in the PEGDA droplets.

FIGS. 8(b)-(d) show the top-view and side-view SEM images of the typical microspheres, suggesting that the SPM particle chains are not only embedded inside the microspheres in the form of straight strings but also laid on the curved surface along the longitudinal direction. The "bent" assembly of SPM particles on the microsphere surface can be attributed to the combined effect of the spherical confinement of the emulsion droplets and the magnetically induced strong repulsive force perpendicular to the direction of the external field. The bent surface assemblies can be viewed as chains tilted from the vertical direction with the degree of tilting determined by the curvature of the microspheres. As the microspheres become smaller, the curvature becomes larger and the titling angle increases, leading to a blue-shift of the diffraction. Additionally, the higher surface to volume ratio of smaller microspheres may also increase the ratio of surface chains to embedded ones and eventually change the overall diffracted color of the spheres. For microspheres larger than 10 µm, the embedded straight assemblies dominate and the bending of the surface assemblies is small, so that the microspheres show uniform colors.

The optical response of the microspheres to the external magnetic field was characterized by the switching threshold of field strength and switching frequency, which describe how strong of an external magnetic field is required to rotate the microspheres and how fast the microspheres respond to the changes in the magnetic field, respectively. First, a low concentration of microspheres dispersed in a density matched solvent - PEGDA liquid were used to measure the switching threshold. The dispersion was sandwiched between two hydrophobic glass slides to avoid adhesion to the glass substrate. With increasing magnetic field strength, the microspheres were gradually turned "on" and digital photos were taken after approximately 5 seconds of every change in the field strength. FIG. 9 shows the statistic diagrams of the percentage of microspheres (counted in viewable area) that have been turned "on" in an increasing field for two samples with different loading of the magnetic materials. The corresponding accumulative curves are also plotted from the diagrams. It has been found that the loading of the magnetic materials in the microspheres, and not the sphere size is one of the factors, which determines the switching threshold of the field strength. For microspheres with low magnetic loading (8 mg Fe₃O₄/mL PEGDA), 80% of them can be turned on in a magnetic field of approximately 180 Gauss; while for microspheres containing more SPM particles (16 mg Fe₃O₄/mL PEGDA), only a 100 Gauss magnetic field is required to turn on the same number of spheres.

The switching of diffraction could be accomplished rapidly (i.e., less than approximately 1 second (< 1 s)) in a sufficiently strong magnetic field. Turning frequency of the microspheres was measured with a test platform built with a halogen light source, a spectrometer and a rotating magnet unit with geared DC motor. The rotating plate with NS and SN magnets standing alternately will produce a periodical vertical (1100-1200 Gauss) and horizontal magnetic field (300-400 Gauss), whose frequency can be simply controlled by the rotating speed of the plate.

FIG. 10 shows the diffraction of microspheres in a 1.22 and 3.33 Hz vertical/horizontal alternating magnetic field, demonstrating that the photonic microspheres can be rotated quickly. It can be noted that the rotating amplitude gradually decreases with the increase of turning frequency, primarily due to the relatively weak horizontal field strength. In addition, it can be appreciated that when the frequency is higher than approximately 7 Hz, the rotation of microspheres cannot catch up with the external field variation so that they seem to simply vibrate around the vertical state and the diffraction remains on all the time. In accordance with an exemplary embodiment, the switching frequency can be further improved when the microspheres are dispersed in a less viscous solvent or tuned in magnetic fields with higher strengths.

In accordance with an exemplary embodiment, the incorporation of photonic crystals into microspheres allows tuning of the photonic property by simply controlling the sphere orientation, making it very convenient to create bistable states that are required for a plurality of applications such as displays. For example, a simple switchable color display system in which the color information can be re-written multiple times by means of the magnetic field. The basic idea is to create bistable states by embedding the microspheres into a matrix that can be switched between liquid and solid states.

In accordance with an exemplary embodiment, long chain hydrocarbons and short chain polymers, such as paraffin and poly(ethylene glycol), have melting points slightly above room temperature. When heated, the matrix material melts, allowing the display of colors by aligning the microspheres using magnetic fields. When the system is cooled to room temperature, the matrix solidifies and the orientation of microspheres is frozen so that the color information remains for long time without the need of additional energy. It can be appreciated that an external magnetic field can not alter their color once the orientation of microspheres is fixed by the matrix. Reheating the matrix materials, however, will erase the particular color by randomizing the orientation of the microspheres or by magnetically reorienting the microspheres to a completely "off" state.

FIG. 11 shows three examples of such displays fabricated by embedding the microspheres in polyethylene glycol (PEG, Mw=1500) films, which can be melted at approximately 46°C. The comparison of digital photos and reflection spectra clearly demonstrates two stable diffractive states at room temperature, suggesting the possible applications of such systems as economical and rewriteable color display units.

It can be appreciated that the magnetochromatic microspheres can be prepared through a simultaneous magnetic assembly and UV curing process in an emulsion system. In accordance with an exemplary embodiment, superparamagnetic Fe₃O₄@SiO₂ colloidal particles are self-organized into ordered structures inside emulsion droplets of UV curable resin, followed by an immediate UV curing process to polymerize the droplets and fix the ordered structures. In addition, it can be appreciated that by rotating the microspheres, the orientation of the magnetic chains can be controlled, and thereby the diffractive colors. In addition, a plurality of copies of the microspheres can be produced using the process, and can be tuned by external fields to collectively display uniform colors. The excellent stability, good compatibility with dispersion media, and the capability of fast on/off switching of the diffraction by magnetic fields, also make the system suitable for applications such as color displays, signage, bio- and chemical detection, and magnetic field sensing.

In accordance with an exemplary embodiment, as the size of the magnetite particle increases, the color red shifts (or the diffraction wavelength increases). As the thickness of the silica coating increases, the color red shifts (or the diffraction wavelength increases). As the magnetic field strength increases, the color blue shifts (or the diffraction wavelength decreases). However, it can be appreciated that the color or the diffraction wavelength is determined by not only the magnetite particle size, the silica coating (or coating medium), and magnetic field strength, but also many other parameters such as the chemical nature of the resin, the surface charge of the particle surface, and the additives.

In accordance with an exemplary embodiment, the relation of the colors (Red, Green & Blue) to the three parameters (size of magnetite particle, thickness of silica coating, magnetic field strength) is as follows, as the overall size of Fe₃O₄/SiO₂ colloids increase from about 120 nm to 200 nm, the color shifts from blue to red. As the magnetic field strength increase, the color would blue shift. In accordance with an exemplary embodiment, the magnetic field preferably is in the range of approximately 100 Gauss to approximately 400 Gauss. It can also be appreciated that as the amount of magnetic content within a composite, which is defined as magnetic density, the more magnetic content (Fe₃O₄), less magnetic field is required to rotate the microspheres.

In the accordance with an exemplary embodiment, the method and systems as disclosed herein, microspheres can be incorporated into a display device wherein very small quanta of microspheres can be locally manipulated to change color or to create on-off color using an integrated micromagnetic actuator to produce local magnetic flux in the area from several to tens of micrometers. For example, exemplary methods and devices for actuating microspheres includes those described in Chong H. Ahn and Mark G. Allen, A Fully Integrated Micromagnetic Actuator With A Multilevel Meander Magnetic Core, in "Solid-State Sensor and Actuator Workshop, 1992. 5th Technical Digest., IEEE", 1992, page 14-18; and Yae Yeong Park; Han, S.H.; Allen, M.G., Batch-fabricated microinductors with electroplated magnetically anisotropic and laminated alloy cores, IEEE Transactions on Magnetics, 1999, 35, 4291-4300; (3) J. Park, S. Han, W. Taylor, and M. Allen, "Fully integrated micromachined inductors with electroplated anisotropic magnetic cores," in IEEE 13th Applied Power Electron. Conf. Anaheim, CA, 1998, disclose examples of microscale devices.

In accordance with another embodiment, it can be appreciated that the ordered structures in the micromagnetospheres are composed of parallel ID chains of magnetite crystals, their spacing determined by the balance of the attractive and repulsive forces, which in turn are affected by the external magnetic field. In addition, it can be appreciated that the colors exhibited by the magnetite crystals in solution, or fixed, are created by the ordered structures described above (1D chains).

It will be understood that the foregoing description is of the preferred embodiments, and is, therefore, merely representative of the article and methods of manufacturing the same. It can be appreciated that many variations and modifications of the different embodiments in light of the above teachings will be readily apparent to those skilled in the art. Accordingly, the exemplary embodiments, as well as alternative embodiments, may be made without departing from the and scope of the articles and methods as set forth in the attached claims.

### References

1. Srinivasarao, M. Nano-Optics in the Biological World: Beetles, Butterflies, Birds, and Moths. Chem. Rev. 99, 1935-1961 (1999).
2. Vukusic, P., Sambles, J. R. & Lawrence, C. R. Colour mixing in wing scales of a butterfly. Nature 404, 457 (2000).
3. Parker, A. R., McPhedran, R. C., Mckenzie, D. R., Botten, L. C. & Nicorovici, N. P. Aphrodite's iridescence. Nature 409, 36-37 (2001).
4. Kinoshita, S., Yoshioka, S. & Kawagoe, K. Mechanisms of structural colour in the Morpho butterfly: cooperation of regularity and irregularity in an iridescent scale. Proc. R. Soc. B 269,1417-1421 (2002).
5. Zi, J. et al. Coloration strategies in peacock feathers. PNAS 100, 12576-12578 (2003).
6. Potyrailo, R. A. et al. Morpho butterfly wing scales demonstrate highly selective vapour response. Nature Photonics 1, 123-128 (2007).
7. Braun, P. V. et al. Epitaxial growth of high dielectric contrast three-dimensional photonic crystals. Adv. Mater 13, 721-724 (2001).
8. Lee, S., Yi, G. & Yang, S. High-speed fabrication of patterned colloidal photonic structures in centrifugal microfluidic chips. Lab chip 6, 1171-1177 (2006).
9. Lu, Y., Yin, Y., Gates B. & Xia, Y. Growth of large crystals of monodispersed spherical colloids in fluidic cells fabricated using non-photolithographic methods. Langmuir 17, 6344-6350 (2001).
10. Holgado, M. et al. Electrophoretic deposition to control artificial opal growth. Langmuir 15, 4701-4704 (1999).
11. Jiang, P., Bertone, J. F., Hwang, K. S. & Colvin, V. L. Single-crystal colloidal multilayers of controlled thickness. Chem. Mater. 11, 2132-2140 (1999).
12. Velev, O. D., Lenhoff, A. M. & Kaler, E. W. A class of microstructured particles through colloidal crystallization. Science 287, 2240-2243 (2000).
13. Vlasov, Y. A., Bo, X., Sturm, J. C. & Norris, D. J. On-chip natural assembly of silicon photonic bandgap crystals. Nature 414, 289-293 (2001).
14. Gu, Z., Fujishima, A. & Sato, O. Fabrication of high-quality opal films with controllable thickness. Chem. Mater 14, 760-765 (2002).
15. Fudouzi, H. & Xia, Y. Colloidal crystals with tunable colors and their use as photonic papers. Langmuir 19, 9653-9660 (2003).
16. Prevo, B. G. & Velev, O. D. Controlled, rapid deposition of structured coatings from micro- and nanoparticle suspensions. Langmuir 20, 2099-2107 (2004).
17. Masuda, Y., Itoh, T., Itoh, M. & Koumoto, K. Self-assembly patterning of colloidal crystals constructed from opal structure or NaCl structure. Langmuir 20, 5588-5592 (2004).
18. Wang, J. et al. Simple fabrication of full color colloidal crystal films with tough mechanical strength. Macromol. Chem. Phys. 207, 596-604 (2006).
19. Huang, J., Wang, X. & Wang, Z. L. Controlled replication of butterfly wings for achieving tunable photonic properties. Nano Letters 6, 2325-2331 (2006).
20. Saito, A., Yoshioka, S. & Kinoshita, S. Reproduction of the Morpho butterfly's blue: arbitration of contradicting factors. Proc. SPIE 5526, 188-194 (2004).
21. Wong, T., Gupta, M. C., Robins, B. & Levendusky, T. L. Color generation in butterfly wings and fabrication of such structures. Optics Letters 28, 2342-2344 (2003).
22. Watanabe, K. et al. Optical measurement and fabrication from a Morpho-butterfly-scale quasistructure by focused ion beam chemical vapor deposition. J. Vac. Sci. Technol. B 23, 570-574 (2005).
23. Ge, J., Hu, Y. & Yin, Y. Highly tunable superparamagnetic colloidal photonic crystals. Angew. Chem. Int. Ed. 46, 7428-7431 (2007).
24. Ge, J. & Yin, Y. Magnetically tunable colloidal photonic structures in alkanol solutions. Adv. Mater. 20, 3485-3491 (2008).
25. Furst, E. M. & Gast, A. P. Dynamics and lateral interactions of dipolar chains. Phys. Rev. E 62, 6916-6925 (2000).
26. Martin, J. E., Hill, K. M. & Tigges, C. P. Magnetic-field-induced optical transmittance in colloidal suspensions. Phys. Rev. E 59, 5676-5692 (1999).
27. Raghavan, S. R., Walls, H. J. & Khan, S. A. Rheology of silica dispersions in organic liquids: new evidence for solvation forces dictated by hydrogen bonding. Langmuir 16, 7920-7930 (2000).
28. Kobayashi, M., Juillerat, F., Galletto, P., Bowen, P. & Borkovec, M. Aggregation and charging of colloidal silica particles: effect of particle Size. Langmuir 21, 5761-5769 (2005).
29. Dickstein, A. J., Erramilli, S., Goldstein, R. E., Jackson, D. P. & Langer, S. A. Labyrinthine pattern formation in magnetic fluids. Science 261, 1012-1015 (1993).
30. Panda, P. et al. Stop-flow lithography to generate cell-laden microgel particles. Lab Chip 8, 1056-1061 (2008).
31. Chung, S. E. et al. Optofluidic maskless lithography system for real-time synthesis of photopolymerized microstructures in microfluidic channels. Appl. Phys. Lett. 91, 041106 (2007).
32. Chung, S. E., Park, W., Shin, S., Lee, S. A. & Kwon, S. Guided and fluidic self-assembly of microstructures using railed microfluidic channels. Nature Materials 7, 581-587 (2008).
33. Ito, T. & Okazaki, S. Pushing the limits of lithography. Nature 406, 1027-1031 (2000).
34. Bayer, B. E. An optimum method for two-level rendition of continuoustone pictures. Proc. of IEEE Int'l Conf. on. Comm. 1, 26-11-26-15 (1973).
35. Ulichney, R. Digital Halftoning (MIT Press, Cambridge, MA, 1987).
36. Bruchez, M., Moronne, M., Gin, P., Weiss, S. & Alivisatos, A. P. Semiconductor nanocrystals as fluorescent biological labels. Science 281, 2013-2016 (1998).
37. Han, M., Gao, X., Su, J. Z. & Nie, S. Quantum-dot-tagged microbeads for multiplexed optical coding of biomolecules. Nature Biotechnology 19, 631-635 (2001).
38. Nicewarner-pena, S. R. et al. Submicrometer metallic barcodes. Science 294, 137-141(2001).
39. Pregibon, D. C., Toner, M. & Doyle, P. S. Multifunctional encoded particles for high-throughput biomolecule analysis. Science 315, 1393-1396 (2007).
40. Dendukuri, D., Pregibon, D. C., Collins, J., Hatton, T. A. & Doyle, P. S. Continuous-flow lithography for high-throughput microparticle synthesis. Nature Materials 5, 365-369 (2006).
41. Yablonovitch, E. Inhibited Spontaneous Emission in Solid-State Physics and Electronics. Phys. Rev. Lett. 58, 2059-2062 (1987).
42. Yablonovitch, E. Photonic Crystals: Semiconductors of Light. Sci. Am. 285, 47-55 (2001).
43. Norris, D.J. Photonic Crystals: A View of the Future. Nat. Mater. 6, 177-178 (2007).
44. Krauss, T.F. Photonic Crystals: Cavities without Leaks. Nat. Mater. 2, 777-778 (2003).
45. Akahane, Y., Asano, T., Song, B.-S. & Noda, S. High-Q Photonic Nanocavity in a Two-Dimensional Photonic Crystal. Nature 425, 944-947 (2003).
46. Arsenault, A.C., Puzzo, D.P., Manners, I. & Ozin, G.A. Photonic-crystal full-colour displays. Nat. Photon. 1, 468-472 (2007).
47. Barry, R.A. & Wiltzius, P. Humidity-Sensing Inverse Opal Hydrogels. Langmuir 22, 1369-1374 (2006).
48. Holtz, J.H. & Asher, S.A. Polymerized colloidal crystal hydrogel films as intelligent chemical sensing materials. Nature 389, 829-832 (1997).
49. Lee, K. & Asher, S.A. Photonic crystal chemical sensors: pH and ionic strength. J. Am. Chem. Soc. 122, 9534-9537 (2000).
50. Kuai, S.-L., Bader, G. & Ashrit, P.V. Tunable Electrochromic Photonic Crystals. Appl. Phys. Lett. 86, 221110 (2005).
51. Pevtsov, A.B. et al. Ultrafast stop band kinetics in a three-dimensional opal-VO2 photonic crystal controlled by a photoinduced semiconductor-metal phase transition. Phys. Rev. B 75, 153101 (2007).
52. Ji, Z. et al. Thermally tuning of the photonic band gap of SiO2 colloid-crystal infilled with ferroelectric BaTiO3. Appl. Phys. Lett. 78, 661-663 (2001).
53. Kang, D., Maclennan, J.E., Clark, N.A., Zakhidov, A.A. & Baughman, R.H. Electro-optic Behavior of Liquid-Crystal-Filled Silica Opal Photonic Crystals: Effect of Liquid-Crystal Alignment. Phys. Rev. Lett. 86, 4052-4055 (2001).
54. Leonard, S.W. et al. Tunable two-dimensional photonic crystals using liquid crystal infiltration. Phys. Rev. B 61, R2389-R2392 (2000).
55. Mach, P. et al. Switchable Bragg diffraction from liquid crystal in colloid-templated structures. J. Europhys. Lett. 58, 679-685 (2002).
56. Gu, Z.Z., Fujishima, A. & Sato, O. Photochemically Tunable Colloidal Crystals. J. Am. Chem. Soc. 122, 12387-12388 (2000).
57. Sumioka, K., Kayashima, H. & Tsutsui, T. Tuning the Optical Properties of Inverse Opal Photonic Crystals by Deformation. Adv. Mater. 14, 1284-1286 (2002).
58. Jeong, U. & Xia, Y. Photonic Crystals with Thermally Switchable Stop Bands Fabricated from Se@Ag2Se Spherical Colloids. Angew. Chem. Int. Ed. 44, 3099-3103 (2005).
59. Fleischhaker, F. et al. Photochemically and Thermally Tunable Planar Defects in Colloidal Photonic Crystals. J. Am. Chem. Soc. 127, 9318-9319 (2005).
60. Lumsdon, S.O., Kaler, E.W., Williams, J.P. & Velev, O.D. Dielectrophoretic assembly of oriented and switchable two-dimensional photonic crystals. Appl. Phys. Lett. 82, 949-951 (2003).
61. Xia, J., Ying, Y. & Foulger, S.H. Electric-Field-Induced Rejection-Wavelength Tuning of Photonic-Bandgap Composites. Adv. Mater. 17, 2463-2467 (2005).
62. Kamenjicki Maurer, M., Lednev, I.K. & Asher, S.A. Photoswitchable Spirobenzopyran- Based Photochemically Controlled Photonic Crystals. Adv. Funct. Mater. 15, 1401-1406 (2005).
63. Snoswell, D.R.E. et al. Dynamic control of lattice spacing within colloidal crystals. New J. Phys. 11, 267 (2006).
64. Weissman, J.M., Sunkara, H.B., Tse, A.S. & Asher, S.A. Thermally Switchable Periodicities and Diffraction from Mesoscopically Ordered Materials. Science 274, 959-963 (1996).
65. Asher, S.A. et al. Photonic crystal carbohydrate sensors: Low ionic strength sugar sensing. J. Am. Chem. Soc. 125, 3322-3329 (2003).
66. Arsenault, A.C., Míguez, H., Kitaev, V., Ozin, G.A. & Manners, I. A Polychromic, Fast Response Metallopolymer Gel Photonic Crystal with Solvent and Redox Tunability: A Step Towards Photonic Ink (P-Ink). Adv. Mater. 15, 503-507 (2003).
67. Velev, O.D., Lenhoff, A.M. & Kaler, E.W. A Class of Microstructured Particles Through Colloidal Crystallization. Science 287, 2240-2243 (2000).
68. Rastogi, V. et al. Synthesis of Light-Diffracting Assemblies from Microspheres and Nanoparticles in Droplets on a Superhydrophobic Surface. Adv. Mater. 20, 4263-4268 (2008).
69. Gates, B. & Xia, Y. Photonic Crystals That Can Be Addressed with an External Magnetic Field. Adv. Mater. 13, 1605-1608 (2001).
70. Xu, X., Friedman, G., Humfeld, K.D., Majetich, S.A. & Asher, S.A. Superparamagnetic Photonic Crystals. Adv. Mater. 13, 1681-1684 (2001).
71. Xu, X., Friedman, G., Humfeld, K.D., Majetich, S.A. & Asher, S.A. Synthesis and Utilization of Monodisperse Superparamagnetic Colloidal Particles for Magnetically Controllable Photonic Crystals. Chem. Mater. 14, 1249-1256 (2002).
72. Calderon, F.L., Stora, T., Mondain Monval, O., Poulin, P. & Bibette, J. Direct measurement of colloidal forces. Phys. Rev. Lett. 72, 2959-2962 (1994).
73. Ge, J., He, L., Goebl, J. & Yin, Y. Assembly of Magnetically Tunable Photonic Crystals in Nonpolar Solvents. J. Am. Chem. Soc. 131, 3484-3486 (2009).
74. Ge, J., Hu, Y. & Yin, Y. Highly Tunable Superparamagnetic Colloidal Photonic Crystals. Angew. Chem. Int. Ed. 46, 7428-7431 (2007).
75. Ge, J., Hu, Y., Zhang, T., Huynh, T. & Yin, Y. Self-Assembly and Field-Responsive Optical Diffractions of Superparamagnetic Colloids. Langmuir 24, 3671-3680 (2008).
76. Ge, J. & Yin, Y. Magnetically Tunable Colloidal Photonic Structures in Alkanol Solutions. Adv. Mater. 20, 3485-3491 (2008).
77. Ge, J. & Yin, Y. Magnetically Responsive Colloidal Photonic Crystals. J. Mater. Chem. 18, 5041-5045 (2008).
78. Chung, S.E. et al. Optofluidic maskless lithography system for real-time synthesis of photopolymerized microstructures in microfluidic channels. Appl. Phys. Lett. 91 (2007).
79. Anna, S.L., Bontoux, N. & Stone, H.A. Formation of dispersions using "flow focusing" in microchannels. Appl. Phys. Lett. 82, 364-366 (2003).
80. Link, D.R., Anna, S.L., Weitz, D.A. & Stone, H.A. Geometrically Mediated Breakup of Drops in Microfluidic Devices. Phys. Rev. Lett. 92, 054503 (2004).
81. Thorsen, T., Roberts, R.W., Arnold, F.H. & Quake, S.R. Dynamic Pattern Formation in a Vesicle-Generating Microfluidic Device. Phys. Rev. Lett. 86, 4163 (2001).
82. Xu, Q. & Nakajima, M. The generation of highly monodisperse droplets through the breakup of hydrodynamically focused microthread in a microfluidic device. Appl. Phys. Lett. 85, 3726 (2004).
83. Xu, J.H., Li, S.W., Tan, J., Wang, Y.J. & Luo, G.S. Preparation of highly monodisperse droplet in a T-junction microfluidic device. AIChE J. 52, 3005-3010 (2006).

## Claims

1. A method of creating colored materials comprising ordered structures within magnetochromatic microspheres, the method comprising:
coating a plurality of magnetite nanocrystals with a surface medium;
dispersing the plurality of coated magnetite nanocrystals in a ultraviolet (UV) curable solution;
placing the magnetite nanocrystals and the UV curable solution in an immiscible solution to form an emulsion;
exposing the emulsion to an external magnetic field, which aligns the coated magnetite nanocrystals in one-dimensional chains within emulsion droplets within the curable solution;
curing the emulsion droplets within the curable solution into magnetochromatic microspheres containing parallel chains of crystals by exposing the curable solution to a UV illumination source;
wherein the step of exposing the curable solution to the UV illumination source fixes the ordered structures within the microspheres;
immersing the microspheres in a phase-changeable matrix, the phase-changeable matrix having a liquid phase and a solid phase; and
converting the phase-changeable matrix from the liquid phase to the solid phase, thus fixing the orientation of the microspheres within the solid phase of the phase-changeable matrix.

2. The method of Claim 1, further comprising wherein when the matrix is the liquid phase, adjusting an angle of the external magnetic field to change an orientation of the microspheres, and wherein the orientation of the microspheres are fixed when the matrix goes to the solid phase.

3. The method of Claim 1, wherein the surface medium is silica, or wherein the surface medium is titania (titanium oxide), polystyrene and/or polymethylmethacrylate; and
wherein the curable solution is polyethyleneglycol diacrylate (PEGDA) and a photo inhibitor 2,2-Dimethoxy-2-phenylacetophenone (DMPA), or wherein the curable solution is ethoxylated trimethylolpropane triacrylate (ETPTA), and/or polyethyleneglycol diacrylate (PEGDA) of various molecular weights (e.g., Mw: 258, 575, and 700).

4. The method of Claim 1, wherein the immiscible liquid is a viscous non-polar solvent, or wherein the immiscible liquid is mineral oil, silicone oil, and/or paraffin oil.

5. The method of Claim 2, wherein the phase-changeable matrix is a polyethylene glycol (PEG) film, or wherein the phase-changeable matrix is paraffin, long-chain alkanes, esters, primary alcohols and/or a non-crosslinked polymers such as polyethylene, poly(ethylene oxide), polyethylene-block-poly(ethylene glycol) and/or polyesters.

6. A magnetochromatic composition formed by any of the preceding claims, wherein the composition is used for a color display, or wherein the composition is used for signage, or wherein the composition is used for bio and chemical detection, or wherein the composition is used for magnetic field sensing.

7. A method according to any of claims 1-5 comprising:
a simultaneous magnetic assembly and UV curing process of an emulsion system comprised of superparamagnetic Fe₃O₄@SiO₂ colloidal particles, which are self-organized into ordered structures inside emulsion droplets of UV curable resin, wherein the ordered structures are fixed by an immediate UV curing process to polymerize the droplets; and
optionally further comprising rotating the microspheres using an external magnetic field to change the orientation of the magnetic chains and thereby the diffractive colors of the microspheres.

8. The method of Claim 1, wherein the plurality of magnetite nanocrystals coated with a surface medium are superparamagnetic Fe₃O₄@SiO₂ colloidal particles.

9. The method of claim 1, wherein the phase-changeable matrix can be reversibly switched between the liquid phase and the solid phase.

10. The method of claim 1, wherein the diameter of the microspheres is in the range of from 10 µm to 100 µm.

## Patentansprüche

1. Verfahren zur Herstellung farbiger Materialien, die geordnete Strukturen innerhalb magnetochromatischer Mikrokugeln aufweisen, wobei das Verfahren umfasst:
eine Vielzahl von Magnetit-Nanokristallen mit einem Oberflächenmedium beschichten; eine Vielzahl von beschichteten Magnetit-Nanokristallen in einer durch ultraviolettes (UV) Licht härtbaren Lösung dispergieren;
die Magnetit-Nanokristalle und die durch UV-Licht härtbare Lösung zur Bildung einer Emulsion in eine nicht mischbare Lösung geben;
die Emulsion einem externen Magnetfeld aussetzen, das die beschichteten Magnetit-Nanokristalle innerhalb der Emulsionströpfchen in der härtbaren Lösung in eindimensionalen Ketten ausrichtet;
die Emulsionströpfchen in der härtbaren Lösung zu magnetochromatischen Mikrokugeln mit parallelen Kristallketten aushärten, indem die aushärtbare Lösung einer UV-Beleuchtungsquelle ausgesetzt wird;
wobei der Schritt, die härtbare Lösung einer UV-Beleuchtungsquelle auszusetzen, die geordneten Strukturen innerhalb der Mikrokugeln fixiert;
die Mikrokugeln in eine phasenveränderbare Matrix eintauchen, wobei die phasenveränderbare Matrix eine flüssige Phase und eine feste Phase aufweist; und
die phasenveränderbare Matrix von der flüssigen Phase in die feste Phase wandeln, wodurch die Ausrichtung der Mikrokugeln in der festen Phase der phasenveränderbaren Matrix festgelegt wird.

2. Verfahren gemäß Anspruch 1, ferner umfassend, den Winkel des externen Magnetfeldes so einstellen, dass die Ausrichtung der Mikrokugeln geändert wird, wenn sich die Matrix in der flüssigen Phase befindet und wobei die Orientierung der Mikrokugeln fixiert wird, wenn die Matrix in die feste Phase übergeht.

3. Verfahren gemäß Anspruch 1, wobei das Oberflächenmedium Siliciumdioxid ist oder wobei das Oberflächenmedium Titandioxid, Polystyrol und/oder Polymethylmethacrylat ist; und
wobei die härtbare Lösung Polyethylenglykoldiacrylat (PEGDA) und ein Photoinhibitor 2,2-Dimethoxy-2-Phenylacetophenon (DMPA) ist oder wobei die härtbare Lösung ethoxyliertes Trimethylolpropantriacrylat (ETPTA) und/oder Polyethylenglykoldiacrylat (PEGDA) mit verschiedenen Molekulargewichten (z.B. einem Molekulargewicht von 258, 575 oder 700) ist.

4. Verfahren gemäß Anspruch 1, wobei die nicht mischbare Flüssigkeit ein viskoses unpolares Lösungsmittel ist oder wobei die nicht mischbare Flüssigkeit Mineralöl, Silikonöl und/oder Paraffinöl ist.

5. Verfahren gemäß Anspruch 2, wobei die phasenveränderbare Matrix ein Film aus Polyethylenglycol (PEG) ist oder wobei die phasenveränderbare Matrix aus Paraffin, langkettigen Alkanen, Ester, primären Alkoholen und/oder nicht vernetzten Polymeren wie Polyethylen, Poly(ethylenoxid), Polyethylen-Block-Poly(ethylenglycol) und/oder Polyester besteht.

6. Magnetochromatische Zusammensetzung, die gemäß einem der vorhergehenden Ansprüche gebildet wurde, wobei die Zusammensetzung für ein Farbdisplay verwendet wird oder wobei die Zusammensetzung für Beschilderungen verwendet wird oder wobei die Zusammensetzung für einen biologischen oder chemischen Nachweis verwendet wird oder wobei die Zusammensetzung zur Magnetfeldmessung verwendet wird.

7. Verfahren gemäß einem der Ansprüche 1 bis 5, umfassend:
ein Emulsionssystem aus superparamagnetischen Fe₃O₄@SiO₂-Kolloidteilchen, die sich innerhalb von Emulsionströpfchen aus UV-härtbarem Harz in selbstorganisierten geordneten Strukturen befinden, gleichzeitig magnetisch zusammensetzen und unter UV-Licht aushärten, wobei die geordneten Strukturen durch einen sofortigen UV-Aushärtungsprozess zur Polymerisation der Tröpfchen fixiert werden; und
ferner gegebenenfalls umfassend, die Mikrokugeln unter Verwendung eines externen Magnetfelds drehen, um die Orientierung der Magnetketten und dadurch die Beugungsfarben der Mikrokugeln zu ändern.

8. Verfahren gemäß Anspruch 1, wobei eine Vielzahl der mit einem Oberflächenmedium beschichteten Magnetit-Nanokristalle superparamagnetische Fe₃O₄@SiO₂-Kolloidteilchen sind.

9. Verfahren gemäß Anspruch 1, wobei die phasenveränderbare Matrix reversibel zwischen der flüssigen Phase und der festen Phase geschaltet werden kann.

10. Verfahren gemäß Anspruch 1, wobei der Durchmesser der Mikrokugeln zwischen 10 µm und 100 µm liegt.

## Revendications

1. Un procédé de création de matériaux colorés comprenant des structures ordonnées dans des microsphères magnétochromatiques, le procédé comprenant :
le fait de revêtir une pluralité de nanocristaux de magnétite d'un milieu de surface ;
la dispersion de la pluralité de nanocristaux de magnétite revêtus dans une solution durcissable aux ultraviolets (UV) ;
le placement des nanocristaux de magnétite et de la solution durcissable aux UV dans une solution immiscible pour former une émulsion ;
l'exposition de l'émulsion à un champ magnétique externe, qui aligne les nanocristaux de magnétite revêtus en chaînes unidimensionnelles dans des gouttelettes d'émulsion dans la solution durcissable ;
le durcissement des gouttelettes d'émulsion dans la solution durcissable en microsphères magnétochromatiques contenant des chaînes parallèles de cristaux en exposant la solution durcissable à une source d'éclairage UV ;
dans lequel l'étape consistant à exposer la solution durcissable à la source d'éclairage UV fixe les structures ordonnées dans les microsphères ;
l'immersion des microsphères dans une matrice à changement de phase, la matrice à changement de phase ayant une phase liquide et une phase solide ; et
la conversion de la matrice à changement de phase de la phase liquide à la phase solide, fixant ainsi l'orientation des microsphères dans la phase solide de la matrice à changement de phase.

2. Le procédé selon la revendication 1, comprenant en outre, dans lequel lorsque la matrice est la phase liquide, l'ajustement d'un angle du champ magnétique externe pour changer une orientation des microsphères, et dans lequel l'orientation des microsphères est fixée lorsque la matrice passe en phase solide.

3. Le procédé selon la revendication 1, dans lequel le milieu de surface est de la silice, ou dans lequel le milieu de surface est du dioxyde de titane (oxyde de titane), du polystyrène et / ou du polyméthacrylate de méthyle ; et
dans lequel la solution durcissable est du diacrylate de polyéthylèneglycol (PEGDA) et un photoinhibiteur 2,2-diméthoxy-2-phénylacétophénone (DMPA), ou dans lequel la solution durcissable est du triacrylate de triméthylolpropane éthoxylé (ETPTA), et /ou du diacrylate de polyéthylèneglycol (PEGDA) de poids moléculaires divers (p. ex. Pm : 258, 575, et 700).

4. Le procédé selon la revendication 1, dans lequel le liquide immiscible est un solvant non polaire visqueux, ou dans lequel le liquide immiscible est une huile minérale, une huile de silicone et / ou une huile de paraffine.

5. Le procédé selon la revendication 2, dans lequel la matrice à changement de phase est un film de polyéthylène glycol (PEG), ou dans lequel la matrice à changement de phase est une paraffine, des alcanes à longue chaîne, des esters, des alcools primaires et / ou des polymères non réticulés tels que le polyéthylène, le poly(oxyde d'éthylène), le polyéthylène-bloc-poly(éthylène glycol) et / ou des polyesters.

6. Une composition magnétochromatique formée selon l'une quelconque des revendications précédentes, dans laquelle la composition est utilisée pour un affichage en couleur, ou dans laquelle la composition est utilisée pour la signalisation, ou dans laquelle la composition est utilisée pour la détection biologique et chimique, ou dans laquelle la composition est utilisée pour la détection de champ magnétique.

7. Un procédé selon l'une quelconque des revendications 1 à 5 comprenant :
un procédé d'assemblage magnétique simultané et de durcissement aux UV d'un système d'émulsion constitué de particules colloïdales Fe₃O₄@SiO₂ superparamagnétiques, qui sont auto-organisées en structures ordonnées à l'intérieur de gouttelettes d'émulsion de résine durcissable aux UV, dans lequel les structures ordonnées sont fixées par un procédé de durcissement aux UV immédiat pour polymériser les gouttelettes ; et
éventuellement comprenant en outre la rotation des microsphères en utilisant un champ magnétique externe pour changer l'orientation des chaînes magnétiques et ainsi les couleurs diffractives des microsphères.

8. Le procédé selon la revendication 1, dans lequel la pluralité de nanocristaux de magnétite revêtus d'un milieu de surface sont des particules colloïdales Fe₃O₄@SiO₂ superparamagnétiques.

9. Un procédé selon la revendication 1, dans lequel la matrice à changement de phase peut être commutée de manière réversible entre la phase liquide et la phase solide.

10. Le procédé selon la revendication 1, dans lequel le diamètre des microsphères est dans la plage de 10 µm à 100 µm.
